(19) **Europäisches Patentamt**
**European Patent Office**
**Office européen des brevets**

(11) **EP 3 818 727 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **19736340.1**

(22) Anmeldetag: **01.07.2019**

(51) Internationale Patentklassifikation (IPC):
*H04R 3/00* (2006.01)

(52) Gemeinsame Patentklassifikation (CPC):
**H04R 3/002; H04R 3/007**

(86) Internationale Anmeldenummer:
**PCT/EP2019/067591**

(87) Internationale Veröffentlichungsnummer:
**WO 2020/007793 (09.01.2020 Gazette 2020/02)**

(54) **VORRICHTUNG UND VERFAHREN ZUR MODIFIZIERUNG EINES LAUTSPRECHERSIGNALS ZUR VERMEIDUNG EINER MEMBRANÜBERAUSLENKUNG**

APPARATUS AND METHODS FOR MODIFZING A LOUDSPEAKER SIGNAL FOR AVOIDING EXCESSIVE MEMBRANE DISPLACEMENT

DISPOSITIF ET PROCÉDÉE DE MODIGICATION D'UN SIGNAL D'HAUT-PARLEUR POUR EVITER UN DÉPLACEMENT EXCESSIF DE LA MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2018 DE 102018210872**
**16.08.2018 DE 102018213834**

(43) Veröffentlichungstag der Anmeldung:
**12.05.2021 Patentblatt 2021/19**

(73) Patentinhaber: **Fraunhofer-Gesellschaft zur Förderung**
**der angewandten Forschung e.V.**
**80686 München (DE)**

(72) Erfinder:
• **RITTER, Robin**
**98693 Ilmenau (DE)**
• **MÄNNCHEN, Andreas**
**98693 Ilmenau (DE)**

(74) Vertreter: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
**US-A1- 2018 014 121 US-A1- 2018 184 201**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Ausführungsbeispiele gemäß der Erfindung beziehen sich auf eine Vorrichtung und ein Verfahren zur Modifizierung eines Lautsprechersignals zur Vermeidung einer Membranüberauslenkung. In anderen Worten kann es sich dabei beispielsweise um einen Auslenkungslimiter handeln.

**Technisches Problem**

Grundproblem: Lautsprecher (unabhängig vom Aktorprinzip) können durch zu starke mechanische Belastung beschädigt oder zerstört werden. Dies geschieht im Allgemeinen beim Anlegen einer hohen Eingangsspannung, die in einer zu starken Auslenkung der mechanischen Komponenten des Schallwandlers (Membran, Aufhängung, ...) resultiert. Allgemeiner Lösungsansatz: Die Membranauslenkung wird durch ein gesteuertes Verringern der Eingangsspannung am Lautsprecher begrenzt.

Probleme bei einfacher Lösung: Simple Begrenzer führen zu schlechter Klangqualität und können den mechanischen Schutz des Wandlers nicht garantieren, bzw. benötigen übermäßig viel Headroom, was die Leistungsfähigkeit des Wandlers nicht voll ausnutzt.

In Anbetracht dessen besteht ein Bedarf nach einem Konzept, das einen besseren Kompromiss zwischen einer Verbesserung der Klangqualität, hoher Leistungsfähigkeit des Wandlers und gutem mechanischen Schutz des Wandlers ermöglicht.

Diese Aufgabe wird durch die unabhängigen Patentansprüche mit dem Vorrichtungsanspruch 1, dem Vorrichtungsanspruch 3, dem Verfahrensanspruch 14 und dem Verfahrensanspruch 15 gelöst.

Erfindungsgemäße Weiterbildungen sind in den Unteransprüchen definiert.

**Hintergrund der Erfindung**

Patente US4113983A, US4327250A und US5481617A: In diesen Erfindungen werden Hochpass-Filter mit variabler Grenzfrequenz beschrieben, welche auf Basis eines Auslenkungsmodells die tieffrequenten Anteile aus dem Eingangssignal herausfiltern. Das Eingangssignal durchläuft ein Hochpass-Filter, dessen Grenzfrequenz zu Beginn sehr niedrig ist (z.B. 20 Hz). Anschließend wird das Signal gesplittet und gelangt einerseits zum Verstärker und weiter zum Lautsprecher. Andererseits gelangt es über eine Feedback-Schleife in ein Modell zur Prädiktion der Membranauslenkung. Daraufhin prüft ein Controller, ob die Amplitude des prädizierten Signales oberhalb des festgelegten Grenzwertes liegt. Ist dies der Fall, so wird die Grenzfrequenz des Hochpass-Filters nach oben korrigiert. Ein Nachteil des Filterdesigns ist, dass dem Signal Frequenzanteile entzogen werden können, die für die Membranauslenkung unerheblich sind. Dies bewirkt eine unnötige Verschlechterung der Klangqualität. Eine weitere Schwierigkeit stellt die Reaktionszeit der einzelnen Blöcke dar. Da kein Delay-Element existiert, muss eine gewisse Sicherheitszone zur tatsächlichen maximalen Auslenkungsgrenze eingehalten werden, da das Signal immer mindestens einen Feedbackdurchlauf benötigt, ehe der Schutzmechanismus aktiv wird. Somit können impulsartige Signalanteile nur schwer korrigiert werden. Diese zusätzliche Sicherheitszone verringert den maximalen Schalldruckpegel des Systems.

US20180014121A1: Das Eingangssignal wird gesplittet und gelangt zum einen in ein Delay-Element, woraufhin es durch eine Filterbank in einzelne Frequenzbänder zerlegt wird. Diesen Frequenzbändern werden individuelle Dämpfungsfaktoren hinzugefügt. Zum anderen wird das eingehende Signal per Modell in ein Auslenkungssignal umgerechnet welches anschließend, wie im ersten Signalpfad, in einzelne Frequenzbänder mit individuellen Dämpfungsfaktoren zerlegt wird. Die Dämpfungsfaktoren aus beiden Pfaden sind identisch. Ein Overexcursion Detector prüft, ob das Auslenkungssignal den festgelegten Grenzwert überschreitet. Ist dies der Fall, wird der Gain Calculator aktiviert, welcher neue Dämpfungsfaktoren zur Verringerung der Auslenkung berechnet. Der Gain Update Block, der für die Aktualisierung der Dämpfungsfaktoren im Spannungs-Signalpfad zuständig ist, arbeitet unter Berücksichtigung von Attack-, Hold und Release Zeiten. Zur Berechnung der Dämpfungsfaktoren kommt eine Normalised Least Mean Squares (NLMS) Optimierung zum Einsatz.

A MODEL BASED EXCURSION PROTECTION ALGORITHM FOR LOUDSPEAKERS, Chenchi (Eric) Luo, James McClellan, Milind Borkar, Arthur Redfern: Zu Beginn wird auf Basis des n-ten Spannungssamples sowie eines nichtlinearen Lautsprechermodells die Auslenkung für das n+1-te Sample prädiziert. Im Falle einer zu großen Membranauslenkung wird dieses Auslenkungssample vom Kompressor korrigiert und anschließend mit Hilfe eines inversen Lautsprechermodells in ein Spannungssample zurückgerechnet. Mit dieser Methode sollen zu hohe Membranauslenkungen besser lokalisiert und somit gezielter korrigiert werden. Der Kompressor bietet die Option für verschiedene Kompressionsverhältnisse sowie die Möglichkeit für Soft-Knee/Hard-Knee, um die Intensität des Effekts besser zu kontrollieren.

US8855322B2 zeigt einen Multiband-Limiter (Frequenzbänder an Frequenzgruppen des Gehörs orientiert) mit psychoakustischem Modell zur Lautheitsmaximierung und linearem Auslenkungsmodell (Übertragungsfunktion).

US9807502BA zeigt einen Lautsprechercontroller inkl. Auslenkungslimiter, Temperaturlimiter und Leistungsreduktion mit psychoakustischem Modell.

US2018/184201A1 offenbart Verfahren und Vorrichtungen zum Schutz von Lautsprechern, wobei ein Verstärkungsregler eine Verstärkungseinstellung eines Verstärkungsblocks in Abhängigkeit von einer vorhergesagten Auslenkung und einem ersten Lautsprecher-Impulsantwortmodell und einer vorgegebenen Auslenkungsgrenze steuert.

## Zusammenfassung der Erfindung

Ein Ausführungsbeispiel betrifft eine Vorrichtung zur Modifizierung eines Lautsprechersignals zur Vermeidung einer Membranüberauslenkung. Die Vorrichtung kann konfiguriert sein, um blockweise, in überlappenden Zeitblöcken, auf Basis des Lautsprechersignals ein Membranauslenkungssignal zu prädizieren, um pro Zeitblock einen Membranauslenkungssignalblock zu erhalten. Somit kann, z. B. bevor das Lautsprechersignal an einen Lautsprecher geschickt wird, mit der Vorrichtung aus dem Lautsprechersignal auf eine Membranauslenkung, verursacht z. B. durch das Lautsprechersignal an einer Membran des Lautsprechers, geschlossen werden. Zudem kann die Vorrichtung konfiguriert sein, um eine zeitliche Position einer maximalen Auslenkung eines aktuellen Membranauslenkungssignalblocks eines aktuellen Zeitblocks innerhalb eines Überlappbereichs mit einem nachfolgenden Zeitblock zu ermitteln. Ferner kann die Vorrichtung konfiguriert sein, um für den aktuellen Zeitblock unter Berücksichtigung eines Vergleichs des aktuellen Membranauslenkungssignalblocks mit einem nachfolgenden Membranauslenkungssignalblock oder einer Schätzung des nachfolgenden Membranauslenkungssignalblocks aus dem aktuellen Membranauslenkungssignalblock an der zeitlichen Position einen Pegel zu berechnen, bis zu welchem der aktuelle Membranauslenkungssignalblock ohne Membranüberauslenkung aussteuerbar ist. Ein dem aktuellen Zeitblock nachfolgender Zeitblock, der mit dem aktuellen Zeitblock überlappen kann, weist z. B. den nachfolgenden Membranauslenkungssignalblock auf, der beispielsweise explizit aus einem nachfolgenden Lautsprechersignal des nachfolgenden Zeitblocks mit der Vorrichtung prädiziert werden kann, oder aus dem Membranauslenkungssignalblock des aktuellen Zeitblocks geschätzt werden kann. Dabei kann der von der Vorrichtung berechnete Pegel beispielsweise einen Membranauslenkungsamplitudenpegel, einen Spannungspegel, einen Strompegel, einen Schalldruck (z. B. in Pascal oder in bar), eine Schallenergie (in Watt), eine Schallleistung (in Watt), eine Schallintensität (z. B. in Watt/m$^2$), einen Schallleistungspegel (z. B. in dB), einen Schallintensitätspegel (z. B. in Dezibel), einen Schalldruckpegel (z. B. in Dezibel), einen Lautstärkepegel (z. B. in Phon oder in Dezibel (A)) oder eine Lautheit (z. B. in Sone) darstellen. Die Vorrichtung kann des Weiteren konfiguriert sein, um den aktuellen Membranauslenkungssignalblock auf Basis des Pegels zu dämpfen, um einen modifizierten aktuellen Membranauslenkungssignalblock zu erhalten. Zudem kann die Vorrichtung konfiguriert sein, um ein modifiziertes Lautsprechersignal auf Basis des modifizierten aktuellen Membranauslenkungssignalblocks zu synthetisieren.

Dieses Ausführungsbeispiel der Vorrichtung basiert auf der Erkenntnis, dass durch eine Betrachtung sowohl des aktuellen Zeitblocks, als auch des nachfolgenden Zeitblocks, das Membranauslenkungssignal des aktuellen Zeitblocks nicht zu wenig, oder zu stark, in einem Vergleich zu dem nachfolgenden Membranauslenkungssignalblock, gedämpft wird, wodurch eine hohe Klangqualität erreicht werden kann. Dabei kann die Vorrichtung durch die vergleichsbasierte Dämpfung überlappender Membranauslenkungssignalblöcke einen Overlap-add (z. B. eine segmentierte Faltung von modifizierten Membranauslenkungssignalblöcken aufeinanderfolgender Zeitblöcke) berücksichtigen, durch den in dem Überlappbereich des aktuellen Membranauslenkungssignalblocks mit dem nachfolgenden Membranauslenkungssignalblock ein gemeinsames Membranauslenkungssignal entstehen kann, das eine Auslenkungsamplitude geringer als die Membranüberauslenkung aufweisen sollte, damit ein mechanischer Schutz gewährleistet werden kann. Dafür kann von der Vorrichtung der Pegel bestimmt werden, bis zu dem der Membranauslenkungssignalblock ausgesteuert werden kann, um den aktuellen Membranauslenkungssignalblock im Vergleich zu dem nachfolgenden Membranauslenkungssignalblock in einem optimierten Verhältnis zu dämpfen. Der Pegel wird beispielsweise an der zeitlichen Position der maximalen Auslenkung bestimmt, da an dieser zeitlichen Position z. B. eine Membranüberauslenkung auftreten kann und somit der Pegel so bestimmt werden kann, dass der aktuelle Membranauslenkungssignalblock so gedämpft wird, dass zu dieser zeitlichen Position z. B. nach dem Overlap-add, eine maximale Membranauslenkungsamplitude erreicht werden kann. Somit kann der modifizierte aktuelle Membranauslenkungssignalblock erhalten werden, der sicherstellen kann, dass das daraus synthetisierte Lautsprechersignal z. B. die Membran des Lautsprechers, an den das synthetisierte Lautsprechersignal übertragen werden kann, nicht durch eine Membranüberauslenkung beschädigt und der Lautsprecher bei hoher Leistungsfähigkeit betrieben werden kann, also z. B unter Ausnutzung der komplett möglichen Auslenkung der Membran (z. B. bis zu der maximalen Membranauslenkungsamplitude) ohne Membranüberauslenkung.

Somit ist festzuhalten, dass die Vorrichtung durch das synthetisierte Lautsprechersignal eine hohe Klangqualität bei gutem mechanischen Schutz und hoher Leistungsfähigkeit bereitstellen kann.

Gemäß einem Ausführungsbeispiel kann die Vorrichtung konfiguriert sein, um zur Berechnung des Pegels einen Quotienten zwischen dem aktuellen Membranauslenkungssignalblock an der zeitlichen Position einerseits und einer Summe des nachfolgenden Membranauslenkungssignalblocks oder der Schätzung des nachfolgenden Membranauslenkungssignalblocks an der zeitlichen Position und dem aktuellen Membranauslenkungssignalblock an der zeitlichen Position andererseits zu bestimmen. Somit kann mit dem Quotienten der aktuelle Membranauslenkungssignalblock mit dem nachfolgenden Membranauslenkungssignalblock verglichen werden. Der Quotient kann definieren, wie groß ein Anteil der maximalen Amplitude des aktuellen Membranauslenkungssignalblocks an der zeitlichen Position an einer Gesamtauslenkung, des aktuellen und des nachfolgenden Membranauslenkungssignalblocks an der zeitlichen Position zusammen, sein kann. Somit dann auf Basis dieses Quotienten der Pegel eine maximale Membranauslenkungsamplitude zu der zeitlichen Position für den aktuellen Zeitblock definieren und basierend auf dem Pegel kann der komplette aktuelle Membranauslenkungssignalblock so gedämpft werden, dass die gedämpfte maximale Amplitude an der zeitlichen Position z. B. die maximale Membranauslenkungsamplitude nicht überschreitet. Der Quotient ermöglicht, dass der aktuelle Membranauslenkungssignalblock im Verhältnis zu dem nachfolgenden Membranauslenkungssignalblock durch die Vorrichtung gedämpft werden kann und damit eine hohe Klangqualität erreicht werden kann.

Gemäß einem Ausführungsbeispiel ist die Vorrichtung konfiguriert, um den Quotienten mit einem Sicherheitsfaktor zu skalieren. Der Sicherheitsfaktor kann eine reelle Zahl in einem Bereich von null bis eins darstellen. Dadurch kann erreicht werden, dass der aktuelle Membranauslenkungssignalblock z. B. stärker gedämpft wird, als nötig, wodurch der mechanische Schutz eines Lautsprechers, an den ein durch die Vorrichtung gedämpftes Lautsprechersignal übertragen werden kann, optimiert wird und somit ein langzeitstabiler mechanischer Schutz erreicht werden kann.

Ein Ausführungsbeispiel betrifft eine Vorrichtung zur Modifizierung eines Lautsprechersignals zur Vermeidung einer Membranüberauslenkung. Die Vorrichtung kann konfiguriert sein, um blockweise, in überlappenden Zeitblöcken, auf Basis des Lautsprechersignals ein Membranauslenkungssignal zu prädizieren, um pro Zeitblock einen Membranauslenkungssignalblock zu erhalten. Somit kann, z. B. bevor das Lautsprechersignal an einen Lautsprecher geschickt wird, mit der Vorrichtung aus dem Lautsprechersignal auf eine Membranauslenkung, verursacht z. B. durch das Lautsprechersignal an einer Membran des Lautsprechers, geschlossen werden. Zudem kann die Vorrichtung konfiguriert sein, um einen ersten maximalen Auslenkungsanteil für einen aktuellen Membranauslenkungssignalblock eines aktuellen Zeitblocks in einem ersten Überlappbereich des aktuellen Zeitblocks mit einem vorangegangenen Zeitblock sowie in dem restlichen Bereich von dem aktuellen Membranauslenkungssignalblock zu bestimmen. Somit kann, basierend auf dem ersten maximalen Auslenkungsanteil, für den kompletten aktuellen Zeitblock, z. B. basierend auf einem von der Vorrichtung modifizierten vorangegangenen Membranauslenkungssignalblock (z. B. eines dem aktuellen Zeitblock vorangegangenen Zeitblocks, der mit dem aktuellen Zeitblock überlappen kann), bestimmt werden, wie stark der aktuelle Membranauslenkungssignalblock gedämpft werden muss, um z. B. bei einem Overlap-add des aktuellen Membranauslenkungssignalblocks mit dem modifizierten vorangegangenen Membranauslenkungssignalblock keine Membranüberauslenkung zu verursachen. Außerdem kann die Vorrichtung konfiguriert sein, um einen zweiten maximalen Auslenkungsanteil für den aktuellen Membranauslenkungssignalblock des aktuellen Zeitblocks in einem zweiten Überlappbereich des aktuellen Zeitblocks mit einem nachfolgenden Zeitblock zu bestimmen. Somit kann basierend auf dem zweiten maximalen Auslenkungsanteil, z. B. basierend auf einem von der Vorrichtung prädizierten nachfolgenden Membranauslenkungssignalblock oder basierend auf einem von der Vorrichtung geschätzten nachfolgenden Membranauslenkungssignalblock, basierend auf dem aktuellen Membranauslenkungssignalblock, bestimmt werden, wie stark der aktuelle Membranauslenkungssignalblock gedämpft werden muss, um z. B. bei einem Overlap-add des aktuellen Membranauslenkungssignalblocks mit dem vorangegangenen Membranauslenkungssignalblock keine Membranüberauslenkung zu verursachen. Dabei kann der nachfolgende Membranauslenkungssignalblock z. B. einen dem aktuellen Zeitblock nachfolgenden Zeitblock aufweisen, der mit dem aktuellen Zeitblock überlappen kann. Die Vorrichtung kann konfiguriert sein, um einen Pegel basierend auf dem ersten maximalen Auslenkungsanteil zu berechnen, wenn der erste maximale Auslenkungsanteil kleiner ist als der zweite maximale Auslenkungsanteil oder den Pegel basierend auf dem zweiten maximalen Auslenkungsanteil zu berechnen, wenn der zweite maximale Auslenkungsanteil kleiner ist als der erste maximale Auslenkungsanteil. Zusätzlich kann die Vorrichtung konfiguriert sein, um den aktuellen Membranauslenkungssignalblock auf Basis des Pegels zu dämpfen, um einen modifizierten aktuellen Membranauslenkungssignalblock zu erhalten. Außerdem kann die Vorrichtung konfiguriert sein, um ein modifiziertes Lautsprechersignal auf Basis des modifizierten aktuellen Membranauslenkungssignalblocks zu synthetisieren.

Dieses Ausführungsbeispiel der Vorrichtung basiert auf der Erkenntnis, dass basierend auf dem ersten maximalen Auslenkungsanteil oder basierend auf dem zweiten maximalen Auslenkungsanteil die Vorrichtung den aktuellen Membranauslenkungssignalblock so dämpfen kann, dass beispielsweise bei einem Overlap-add eines vorangegangenen modifizierten Lautsprechersignals mit dem aktuellen modifizierten Lautsprechersignal und bei einem Overlap-add des aktuellen modifizierten Lautsprechersignals mit einem nachfolgenden modifizierten Lautsprechersignal eine Membranüberauslenkung verhindert werden kann. Dabei kann der Pegel, berechnet basierend auf dem ersten maximalen Auslenkungsanteil, definieren, wie stark, der aktuelle Membranauslenkungssignalblock gedämpft werden muss, um bei einem Overlap-add mit einem vorangegangenen modifizierten Membranauslenkungssignalblock nicht eine Membranüberauslenkung hervorzurufen. Da in dem Überlappbereich des aktuellen Zeitblocks mit dem vorangegangenen Zeitblock das Membranauslenkungssignal sowohl den vorangegangenen Membranauslenkungssignalblock als auch den aktuellen Membranauslenkunassianalblock aufweist, können der vorangegangene Membranauslenkungssignalblock und der aktuelle Membranauslenkungssignalblock so in einem Verhältnis zueinander gedämpft werden, dass das Membranauslenkungssignal nicht zu einer Membranüberauslenkung führt. Ist beispielsweise der vorangegangene Membranauslenkungssignalblock bereits sehr stark gedämpft, so kann der aktuelle Membranauslenkungssignalblock nur leicht gedämpft werden und ist der vorangegangene Membranauslenkungssignalblock nur schwach gedämpft, so kann die Vorrichtung veranlassen, dass der aktuelle Membranauslenkungssignalblock sehr stark gedämpft wird. Der zweite maximale Auslenkungsanteil kann ein Verhältnis zwischen dem aktuellen Membranauslenkungssignalblock und dem nachfolgenden Membranauslenkungssignalblock definieren und somit sicherstellen, dass der aktuelle Membranauslenkungssignalblock nicht unverhältnismäßig gegenüber dem nachfolgenden Membranauslenkungssignalblock gedämpft wird und somit eine hohe Klangqualität durch die Vorrichtung erreicht werden kann. Definiert beispielsweise der zweite maximale Auslenkungsanteil eine höhere Dämpfung, als der erste maximale Auslenkungsanteil, so wird der komplette aktuelle Membranauslenkungssignalblock gemäß dem basierend auf dem zweiten maximalen Auslenkungsanteil berechneten Pegel gedämpft. Hierbei ist die Erkenntnis, dass der aktuelle Membranauslenkungssignalblock mindestens so stark gedämpft werden sollte, um eine Membranüberauslenkung zu vermeiden, dass eine Auslenkungsamplitude, des kompletten aktuellen Membranauslenkungssignalblocks nicht eine maximale Auslenkungsamplitude (eine Amplitude größer, als die maximale Auslenkungsamplitude kann z. B. zu einer Membranüberauslenkung führen) überschreitet, daher wird der Pegel basierend auf dem kleineren maximalen Auslenkungsanteil berechnet, da dieser eine größere Dämpfung hervorrufen kann. Somit ist es z. B. vorteilhaft den kompletten aktuellen Membranauslenkungssignalblock mit der größeren Dämpfung zu dämpfen, als mit einer geringeren Dämpfung, die z. B. nur in einem der beiden Überlappbereiche (z. B. dem Überlappbereich des aktuellen Zeitblocks mit dem vorangegangenen Zeitblock oder dem nachfolgenden Zeitblock) nicht zu einer Membranüberauslenkung führt, aber z. B. in dem anderen Überlappbereich zu gering sein kann.

Somit ist festzuhalten, dass die Vorrichtung durch das synthetisierte Lautsprechersignal eine hohe Klangqualität bei gutem mechanischen Schutz und hoher Leistungsfähigkeit bereitstellen kann.

Gemäß einem Ausführungsbeispiel kann die Vorrichtung konfiguriert sein, um den Pegel, basierend auf dem ersten maximalen Auslenkungsanteil, mittels eines Produkts aus einem maximalen Auslenkungsgrenzwert und dem ersten maximalen Auslenkungsanteil zu berechnen oder den Pegel, basierend auf dem zweiten maximalen Auslenkungsanteil, mittels eines Produkts aus dem maximalen Auslenkungsgrenzwert und dem zweiten maximalen Auslenkungsanteil zu berechnen. Der maximale Auslenkungsgrenzwert kann definieren, dass bei einer Auslenkungsamplitude, hervorgerufen durch das modifizierte Lautsprechersignal z. B. nach einem Overlap-add, größer als dem maximalen Auslenkungsgrenzwert, eine Membranüberauslenkung resultieren kann. Da beispielsweise ein von der Vorrichtung bereitgestelltes modifiziertes Lautsprechersignal aus einem Overlap-add von modifizierten Lautsprechersignalen, überlappender Zeitblöcke, resultieren kann, kann der erste maximale Auslenkungsanteil definieren, wie stark der aktuelle Membranauslenkungssignalblock mindestens gedämpft werden sollte, um bei einem Overlap-add mit dem modifizierten vorangegangenen Membranauslenkungssignalblock den maximalen Auslenkungsgrenzwert nicht zu überschreiten; und kann der zweite maximale Auslenkungsanteil definieren, wie stark der aktuelle Membranauslenkungssignalblock mindestens gedämpft werden sollte, um bei einem Overlap-add mit dem nachfolgenden Membranauslenkungssignalblock in einem guten Verhältnis zueinander gedämpft worden zu sein, um eine sehr gute Klangqualität zu erreichen. Da somit der Pegel, basierend auf dem ersten maximalen Auslenkungsanteil, und der Pegel, basierend auf dem zweiten maximalen Auslenkungsanteil, jeweils eine Mindestdämpfung des aktuellen Membranauslenkungssignalblocks definieren können, kann die Vorrichtung den aktuellen Membranauslenkungssignalblock gemäß dem Pegel modifizieren, der eine größere Dämpfung des aktuellen Membranauslenkungssignalblocks hervorruft. Der Pegel sollte von dem aktuellen Membranauslenkungssignalblock nicht überschritten werden, damit keine Membranüberauslenkung z. B. an einem Lautsprecher auftritt.

Gemäß einem Ausführungsbeispiel kann die Vorrichtung konfiguriert sein, um eine zeitliche Position einer maximalen Auslenkung des aktuellen Membranauslenkungssignalblocks des aktuellen Zeitblocks innerhalb des zweiten Überlappbereichs mit dem nachfolgenden Zeitblock zu ermitteln. Somit kann die zeitliche Position einen "kritischen Auslenkungswert" (z. B. die maximale Auslenkung) liefern, die eine Membranüberauslenkung hervorrufen kann. Ferner kann die Vorrichtung konfiguriert sein, um für den zweiten maximalen Auslenkungsanteil einen Quotienten zwischen dem aktuellen Membranauslenkungssignalblock an der zeitlichen Position einerseits und einer Summe eines nachfolgenden Membranauslenkungssignalblocks oder einer Schätzung des nachfolgenden Membranauslenkungssignalblocks an der zeitlichen Position, basierend auf dem aktuellen Membranauslenkungssignalblock des aktuellen Zeitblocks, und dem aktuellen Membranauslenkungssignalblock an der zeitlichen Position andererseits zu bestimmen, wodurch die Vorrichtung vorausschauend den aktuellen Membranauslenkungssignalblock modifizieren kann, um eine Klangqualität zu optimieren.

Gemäß einem Ausführungsbeispiel kann die Vorrichtung konfiguriert sein, um den Quotienten mit einem Sicherheitsfaktor zu skalieren. Der Sicherheitsfaktor kann eine reelle Zahl in einem Bereich von null bis eins darstellen. Dadurch kann erreicht werden, dass der aktuelle Membranauslenkungssignalblock z. B. stärker gedämpft wird, als nötig, wodurch der mechanische Schutz eines Lautsprechers, an den ein durch die Vorrichtung gedämpftes Lautsprechersignal übertragen werden kann, optimiert wird und somit ein langzeitstabiler mechanischer Schutz erreicht werden kann.

Gemäß einem Ausführungsbeispiel kann die Vorrichtung konfiguriert sein, um den zweiten maximalen Auslenkungsanteil auf Basis des aktuellen Membranauslenkungssignalblocks zu schätzen. Somit wird von der Vorrichtung für eine Bestimmung des zweiten maximalen Auslenkungsanteils z. B. nur noch der aktuelle Membranauslenkungssignalblock verwendet, wodurch die Vorrichtung effizienter und einfacher den aktuellen Membranauslenkungssignalblock dämpfen kann und somit einen sehr effektiven mechanischen Schutz, für z. B. Lautsprecher bieten kann.

Gemäß einem Ausführungsbeispiel kann die Vorrichtung konfiguriert sein, um den zweiten maximalen Auslenkungsanteil auf Basis des aktuellen Membranauslenkungssignalblock mittels eines neuronalen Netzwerks zu schätzen. Das neuronale Netzwerk ermöglicht eine sehr genaue Schätzung des zweiten maximalen Auslenkungsanteils, wodurch mit sehr hoher Effizienz und sehr hohen Geschwindigkeit die Vorrichtung den aktuellen Membranauslenkungssignalblock dämpfen kann, um eine Membranüberauslenkung zu vermeiden.

Gemäß einem Ausführungsbeispiel kann die Vorrichtung konfiguriert sein, um den aktuellen Membranauslenkungssignalblock in zumindest einen Frequenzbandsignalzeitblock zu zerlegen. Dabei kann der zumindest eine Frequenzbandsignalzeitblock z. B. ein Frequenzband des aktuellen Membranauslenkungssignalblocks über den kompletten aktuellen Zeitblock aufweisen. Da einzelne Frequenzbänder beispielsweise eine unterschiedliche Dämpfung erfahren sollten, damit es zu keiner Membranüberauslenkung kommt und damit die Klangqualität verbessert werden kann, ist eine Zerlegung des aktuellen Membranauslenkungssignalblocks in den zumindest einen Frequenzbandsignalzeitblock vorteilhaft.

Gemäß einem Ausführungsbeispiel kann die Vorrichtung konfiguriert sein, um für jeden des zumindest einen Frequenzbandsignalzeitblocks zumindest eine weitere zeitliche Position zu ermitteln, an der eine vorbestimmte Signalkombination einen maximalen Auslenkungsgrenzwert überschreitet, und zwar in dem ersten Überlappbereich des aktuellen Zeitblocks mit dem vorangegangenen Zeitblock sowie in dem restlichen Zeitblock. Somit können die weiteren Positionen (es kann z. B. jeder Frequenzbandsignalzeitblock eine weitere Position aufweisen) z. B. anzeigen, dass an diesen Stellen der jeweilige Frequenzzeitblock, bzw. der aktuelle Membranauslenkungssignalblock von der Vorrichtung gedämpft werden sollte, damit keine Membranüberauslenkung verursacht wird. Durch die Verwendung der Signalkombination kann zudem sichergestellt werden, dass die so bestimmte weitere Position tatsächlich eine "kritische Position" darstellt, die gedämpft werden sollte, wodurch die Vorrichtung sehr effizient und mit geringer Anzahl bis keinem Fehler Positionen (z. B. die weiteren zeitlichen Positionen) ausfindig machen kann, die eine Membranüberauslenkung verursachen können.

Gemäß einem Ausführungsbeispiel kann die Signalkombination eine additive Kombination des aktuellen Membranauslenkungssignalblocks mit einem modifizierten vorangegangenen Membranauslenkungssignalblock; und eine additive Kombination des jeweiligen Frequenzbandsignalzeitblocks mit dem modifizierten vorangegangenen Membranauslenkungssignalblock; und eine additive Kombination eines Betrags des aktuellen Membranauslenkungssignalblocks mit einem Betrag des modifizierten vorangegangenen Membranauslenkungssignalblocks umfassen. Diese drei additiven Kombinationen ermöglichen unter anderem, dass die weiteren zeitlichen Positionen, an denen z. B. eine maximale Auslenkung auftreten kann, so bestimmt sind, dass sie z. B. keine zeitliche Position aufweisen, bei der maximale Auslenkungen einzelner Frequenzbandsignalzeitblöcke sich gegenseitig, z. B. aufgrund einer Phasenlage, auslöschen. Zudem kann von den drei additiven Kombinationen bedacht sein, dass maximale Amplituden in Frequenzbandsignalzeitblöcken, mit einem relativ hochfrequenten Frequenzband, ausreichend stark gedämpft werden sollten; und maximale Auslenkungen, die zeitlich nah beieinander in unterschiedlichen Frequenzbandsignalzeitblöcke liegen, in dem kompletten aktuellen Membranauslenkungssignalblock zu Verschmierungen einer maximalen Auslenkung an der zeitlichen Position führen können. Somit kann die Vorrichtung sehr effizient und sicher einen guten mechanischen Schutz z. B. eines Lautsprechers, an den die Vorrichtung das modifizierte Lautsprechersignal übertragen kann, bieten.

Gemäß einem Ausführungsbeispiel kann die Vorrichtung konfiguriert sein, um einen Dämpfungsfaktor für jeden des zumindest einen Frequenzbandsignalzeitblocks, basierend auf dem Pegel und der weiteren zeitlichen Position zu bestimmen, um den aktuellen Membranauslenkungssignalblock zu dämpfen. Somit wird eine frequenzbandabhängige Dämpfung gewährleistet, wodurch die Klangqualität optimiert werden kann.

Gemäß einem Ausführungsbeispiel kann die Vorrichtung konfiguriert sein, um den Dämpfungsfaktor pro Frequenzbandsignalzeitblock für den aktuellen Zeitblock mit einer Version des Dämpfungsfaktors pro Frequenzbandsignalzeitblock für den vorangegangenen Zeitblock, verringert in Dämpfungsstärke durch eine vorbestimmte Abklingfunktion, zu vergleichen und für den aktuellen Zeitblock unter denselben einen gewählten Dämpfungsfaktor zu verwenden, der mit einer höheren Dämpfung verbunden ist. Dies kann beispielsweise mittels Attack-, Hold- und Release-Funktionen erfolgen und eine Optimierung der Klangqualität zur Folge haben. Die vorbestimmte Abklingfunktion kann z. B. definieren, wie schnell eine von der Vorrichtung angewendete Dämpfung auf den aktuellen Membranauslenkungssignalblock abklingen kann um somit z. B. wieder das originale Lautsprechersignal ohne Dämpfung bereitzustellen. Die Release-Funktion kann unterschiedliche Release-Zeiten aufweisen, um die Klangqualität zu verbessern. Die Release-Zeiten können unteranderem von einer Dauer an Überschreitungen einer maximalen Auslenkungsgrenze als auch von einer Stärke der Dämpfung abhängig sein.

Somit wird ermöglicht, dass der aktuelle Membranauslenkungssignalblock ausreichend lang aber nicht zu lang gedämpft wird, um zu vermeiden, dass der aktuelle Membranauslenkungssignalblock auch an Positionen, die nicht zu einer Membranüberauslenkung führen, gedämpft wird.

Gemäß einem Ausführungsbeispiel kann die Vorrichtung konfiguriert sein, um den aktuellen Membranauslenkungssignalblock in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen. Die vorbestimmte Abklingfunktion kann Zeitkonstanten aufweisen, die sich für den perkussiven Signalanteil und/oder den harmonischen Signalanteil unterscheiden können, um die Klangqualität zu optimieren. So können beispielsweise für den perkussiven Signalanteil kurze Zeitkonstanten vorteilhaft sein und für den harmonischen Signalanteil lange Zeitkonstanten.

Gemäß einem Ausführungsbeispiel kann die Vorrichtung konfiguriert sein, um für jede der zumindest einen weiteren zeitlichen Positionen einen ersten maximalen Auslenkungsanteil für den aktuellen Zeitblock unter Berücksichtigung des maximalen Auslenkungsgrenzwerts und des modifizierten vorangegangenen Membranauslenkungssignalblocks zu berechnen. Somit kann der erste maximale Auslenkungsanteil definieren, welchen Anteil der aktuelle Membranauslenkungssignalblock an dem maximalen Auslenkungsgrenzwert einnimmt, indem ein Anteil des modifizierten vorangegangenen Membranauslenkungssignalblocks an dem maximalen Auslenkungsgrenzwert bei der Berechnung berücksichtigt werden kann. Hiermit wird z. B. ein Overlap-add zwischen dem vorangegangenen Zeitblock und dem aktuellen Zeitblock berücksichtigt, der Einfluss auf die Membranüberauslenkung haben kann.

Gemäß einem Ausführungsbeispiel kann die Vorrichtung konfiguriert sein, um den ersten maximalen Auslenkungsanteil aus einem Quotienten zwischen einer Differenz des maximalen Auslenkungsgrenzwerts, wobei ein Vorzeichen des maximalen Auslenkungsgrenzwerts von dem aktuellen Membranauslenkungssignalblock an der weiteren zeitlichen Position abhängt, und des modifizierten vorangegangenen Membranauslenkungssignalblocks einerseits und dem maximalen Auslenkungsgrenzwert andererseits zu berechnen. Somit kann der erste maximale Auslenkungsanteil in Prozent angeben, wie stark der aktuelle Membranauslenkungssignalblock in einem Bezug zu dem maximalen Auslenkungsgrenzwert von der Vorrichtung gedämpft werden sollte. Der erste maximale Auslenkungsanteil summiert mit einem Anteil des modifizierten vorangegangenen Membranauslenkungssignalblocks an dem maximalen Auslenkungsgrenzwert ergibt z. B. 100%. Optional kann die Vorrichtung konfiguriert sein, um den ersten maximalen Auslenkungsanteil mit dem maximalen Auslenkungsgrenzwert zu multiplizieren, um den Pegel zu bestimmen, den der aktuelle Membranauslenkungssignalblock z. B. nicht überschreiten sollte, um eine Membranüberauslenkung zu vermeiden.

Gemäß einem Ausführungsbeispiel kann die Vorrichtung konfiguriert sein, um aus dem modifizierten aktuellen Membranauslenkungssignalblock einen modifizierten aktuellen Lautsprechersignalblock zu berechnen und einen ersten Teil (z. B. ein Überlappbereich des aktuellen Zeitblocks mit dem vorangegangenen Zeitblock) des modifizierten aktuellen Lautsprechersignalblocks einem Overlap-Add mit einem modifizierten vorangegangenen Lautsprechersignalblock zu unterziehen, um ein modifiziertes Lautsprechersignal zu synthetisieren. In anderen Worten ist eine Ausgabe an den Lautsprecher z. B. nur die Überlappung des vorangegangenen modifizierten Lautsprechersignalblocks mit dem ersten Teil des aktuellen modifizierten Lautsprechersignalblocks. Für den Overlap-add kann die Vorrichtung z. B. konfiguriert sein, um das modifizierte Lautsprechersignal des aktuellen Zeitblocks mit einem modifizierten Lautsprechersignal des vorangegangenen Zeitblocks zu einem Gesamtlautsprechersignal in dem ersten Überlappbereich zu verrechnen und das modifizierte Lautsprechersignal des aktuellen Zeitblocks mit einem modifizierten Lautsprechersignal des nachfolgenden Zeitblocks zu einem Gesamtlautsprechersignal in dem zweiten Überlappbereich zu verrechnen. Das Gesamtlautsprechersignal kann cnmit z. B. alle modifizierten Lautsprechersignale aller Zeitblöcke umfassen und Überlappbereiche der einzelnen Zeitblöcke mit dem Overlap-add miteinander verrechnen. Das Gesamtlautsprechersignal kann auch als das modifizierte Lautsprechersignal bezeichnet werden, das von der Vorrichtung auf Basis des modifizierten aktuellen Membranauslenkungssignalblocks synthetisiert werden kann.

Gemäß einem Ausführungsbeispiel kann die Vorrichtung konfiguriert sein, um anstelle des modifizierten aktuellen Lautsprechersignalblocks, ein aktuelles Lautsprechersignal bereitzustellen, wenn eine maximale Auslenkung des aktuellen Membranauslenkungssignalblocks des aktuellen Zeitblocks einen maximalen Auslenkungsgrenzwert nicht überschreitet. Somit wird ermöglicht, dass die Vorrichtung zunächst überprüft, ob eine Modifikation, bzw. eine Dämpfung durch die Vorrichtung durchgeführt werden sollte und die Vorrichtung nur dann, die Modifikation, bzw. die Dämpfung durchführt, wenn die Vorrichtung erkennt, dass ohne die Modifikation, bzw. die Dämpfung das aktuelle Lautsprechersignal in einer Membranüberauslenkung resultieren könnte. Somit kann die Vorrichtung sehr effizient und mit geringer Leistung einen guten mechanischen Schutz für einen Lautsprecher bieten. Zusätzlich wird die Klangqualität optimiert, da das Lautsprechersignal z. B. nur dann modifiziert bzw. gedämpft wird, wenn eine mögliche Membranüberauslenkung von der Vorrichtung erkannt wird und ansonsten das originale Lautsprechersignal von der Vorrichtung bereitgestellt bzw. an den Lautsprecher übertragen werden kann.

Gemäß einem Ausführungsbeispiel ist die Vorrichtung, um den aktuellen Membranauslenkungssignalblock zu dämpfen, ausgebildet, um einen oder mehrere Dämpfungsfaktoren basierend auf dem Pegel zu berechnen und um die ein oder mehreren Dämpfungsfaktoren mit dem aktuellen Membranauslenkungssignalblock zu verrechnen. Der aktuelle Membranauslenkungssignalblock sollte z. B. den Pegel nicht überschreiten, wodurch die Vorrichtung die Dämpfungsfaktoren so berechnen kann, dass z. B einzelne Überschreitungen des aktuellen Membranauslenkungssignalblocks oder der komplette Membranauslenkungssignalblock durch die Vorrichtung so gedämpft wird, dass der aktuelle Membranauslenkungssignalblock den Pegel nicht überschreitet. Somit wird zusätzlich ermöglicht, dass die Dämpfungsfaktoren so gewählt sein können, dass der aktuelle Membranauslenkungssignalblock exakt auf den Pegel gedämpft wird, wodurch ein Lautsprecher, an den das durch die Vorrichtung synthetisierte Lautsprechersignal übertragen werden kann, eine hohe Leistungsfähigkeit aufweisen kann, da z. B. eine komplette Auslenkung einer Membran des Lautsprechers ausgenutzt werden kann.

Gemäß einem Ausführungsbeispiel kann die Vorrichtung konfiguriert sein, um den einen oder die mehreren Dämpfungsfaktoren für den aktuellen Zeitblock mit einer Version der ein oder mehreren Dämpfungsfaktoren für den vorangegangenen Zeitblock, verringert in Dämpfungsstärke durch eine vorbestimmte Abklingfunktion, zu vergleichen und für den aktuellen Zeitblock unter denselben einen gewählten Dämpfungsfaktor zu verwenden, der mit einer höheren Dämpfung verbunden ist.

Gemäß einem Ausführungsbeispiel kann die Vorrichtung konfiguriert sein, um den aktuellen Membranauslenkungssignalblock in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen.

Gemäß einem Ausführungsbeispiel kann die vorbestimmte Abklingfunktion für den perkussiven Signalanteil kürzere Zeitkonstanten aufweisen als für den harmonischen Signalanteil.

Ein Ausführungsbeispiel schafft ein Verfahren zur Modifizierung eines Lautsprechersignals zur Vermeidung einer Membranüberauslenkung. Das Verfahren weist z. B die Schritte blockweise Prädiktion, in überlappenden Zeitblöcken, auf Basis des Lautsprechersignals eines Membranauslenkungssignals, um pro Zeitblock einen Membranauslenkungssignalblock zu erhalten; Ermittlung einer zeitlichen Position einer maximalen Auslenkung eines aktuellen Membranauslenkungssignalblocks eines aktuellen Zeitblocks innerhalb eines Überlappbereichs mit einem nachfolgenden Zeitblock; Berechnung eines Pegels, bis zu welchem der aktuelle Membranauslenkungssignalblock ohne Membranüberauslenkung aussteuerbar ist, für den aktuellen Zeitblock unter Berücksichtigung eines Vergleichs des aktuellen Membranauslenkungssignalblocks mit einem nachfolgenden Membranauslenkungssignalblock oder einer Schätzung des nachfolgenden Membranauslenkungssignalblocks aus dem aktuellen Membranauslenkungssignalblock an der zeitlichen Position; Dämpfung des aktuellen Membranauslenkungssignalblocks auf Basis des Pegels, um einen modifizierten aktuellen Membranauslenkungssignalblock zu erhalten; und Synthetisieren eines modifizierten Lautsprechersignals auf Basis des modifizierten aktuellen Membranauslenkungssignalblocks auf.

Ein Ausführungsbeispiel schafft ein Verfahren zur Modifizierung eines Lautsprechersignals zur Vermeidung einer Membranüberauslenkung. Das Verfahren weist z. B. die Schritte blockweise Prädiktion, in überlappenden Zeitblöcken, auf Basis des Lautsprechersignals ein Membranauslenkungssignal, um pro Zeitblock einen Membranauslenkungssignalblock zu erhalten; Bestimmung eines ersten maximalen Auslenkungsanteils für einen aktuellen Membranauslenkungssignalblock eines aktuellen Zeitblocks in einem ersten Überlappbereich des aktuellen Zeitblocks mit einem vorangegangenen Zeitblock sowie in dem restlichen Bereich von dem aktuellen Membranauslenkungssignalblock; Bestimmung eines zweiten maximalen Auslenkungsanteils für den aktuellen Membranauslenkungssignalblock des aktuellen Zeitblocks in einem zweiten Überlappbereich des aktuellen Zeitblocks mit einem nachfolgenden Zeitblock; Berechnung eines Pegels basierend auf dem ersten maximalen Auslenkungsanteil, wenn der erste maximale Auslenkungsanteil kleiner ist als der zweite maximale Auslenkungsanteil oder Berechnung des Pegels basierend auf dem zweiten maximalen Auslenkungsanteil, wenn der zweite maximalen Auslenkungsanteil kleiner ist als der erste maximale Auslenkungsanteil; Dämpfung des aktuellen Membranauslenkungssignalblocks auf Basis des Pegels, um einen modifizierten aktuellen Membranauslenkungssignalblock zu erhalten; und Synthetisieren eines modifizierten Lautsprechersignals auf Basis des modifizierten aktuellen Membranauslenkungssignalblocks auf.

**Figurenkurzbeschreibung**

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:

Fig. 1      eine schematische Darstellung einer Vorrichtung gemäß einem Ausführungsbeispiel der vorliegenden Erfindung;

Fig. 2    eine schematische Darstellung einer Vorrichtung zur Berechnung eines ersten und eines zweiten maximalen Auslenkungsanteils gemäß einem Ausführungsbeispiel der vorliegenden Erfindung;

Fig. 3    ein Blockdiagram eines Gesamtsignalflusses in der Vorrichtung gemäß einem Ausführungsbeispiel der vorliegenden Erfindung;

Fig. 4    ein Blockdiagram einer Signalanalyse der Vorrichtung gemäß einem Ausführungsbeispiel der vorliegenden Erfindung;

Fig. 5a    ein Blockdiagram einer Berechnung eines zweiten maximalen Auslenkungsanteils mit der Vorrichtung gemäß einem Ausführungsbeispiel der vorliegenden Erfindung;

Fig. 5b    ein Blockdiagram einer Berechnung eines zweiten maximalen Auslenkungsanteils mit einer Schätzung eines nachfolgenden Membranauslenkungssignalblocks mittels der Vorrichtung gemäß einem Ausführungsbeispiel der vorliegenden Erfindung;

Fig. 5c    ein Blockdiagram einer Schätzung eines zweiten maximalen Auslenkungsanteils mit der Vorrichtung gemäß einem Ausführungsbeispiel der vorliegenden Erfindung;

Fig. 6    ein Blockdiagram einer Anpassung von Dämpfungsfaktoren mittels der Vorrichtung gemäß einem Ausführungsbeispiel der vorliegenden Erfindung;

Fig. 7    ein Blockdiagram eines Verfahrens zur Modifizierung eines Lautsprechersignals zur Vermeidung einer Membranüberauslenkung gemäß einem Ausführungsbeispiel der vorliegenden Erfindung; und

Fig. 8    ein Blockdiagram eines Verfahrens zur Modifizierung eines Lautsprechersignals zur Vermeidung einer Membranüberauslenkung mit einer Bestimmung eines ersten und eines zweiten maximalen Auslenkungsanteils gemäß einem Ausführungsbeispiel der vorliegenden Erfindung.

## Detaillierte Beschreibung der Ausführungsbeispiele gemäß den Figuren

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

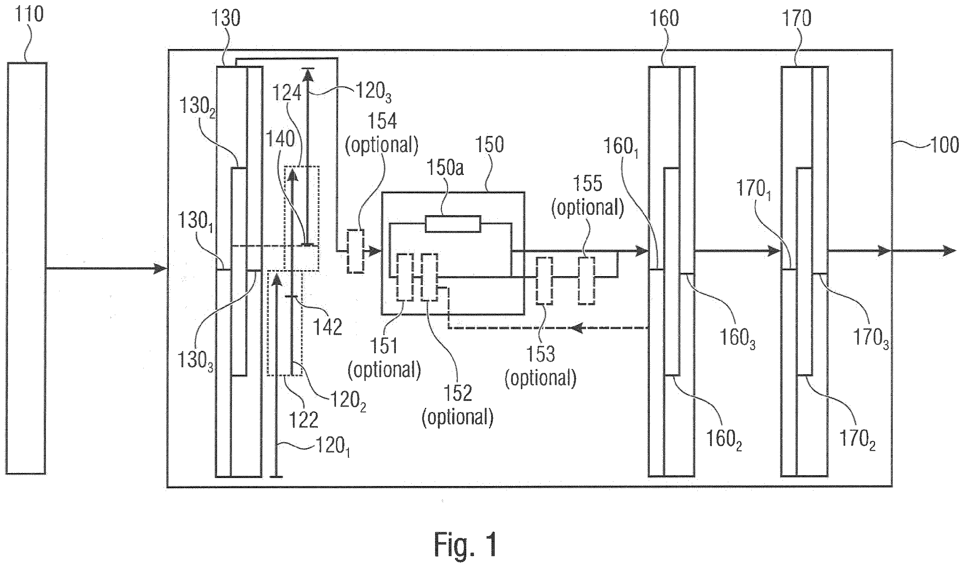

Fig. 1 zeigt eine schematische Darstellung einer Vorrichtung 100 zur Modifizierung eines Lautsprechersignals 110 zur Vermeidung einer Membranüberauslenkung. Die Vorrichtung 100 kann konfiguriert sein, um blockweise in überlappenden Zeitblöcken $120_1$ bis $120_3$, auf Basis des Lautsprechersignals 110 ein Membranauslenkungssignal 130 zu prädizieren, um pro Zeitblock $120_1$ bis $120_3$ einen Membranauslenkungssignalblock $130_1$ bis $130_3$ zu erhalten. Gemäß Fig. 1 kann beispielsweise die Vorrichtung 100 drei Membranauslenkungssignalblöcke $130_1$ bis $130_3$ zu drei Zeitblöcken $120_1$ bis $120_3$ erhalten. Dies ist nur ein Ausführungsbeispiel und es ist möglich, dass die Vorrichtung 100 aus dem Lautsprechersignal 110 das Membranauslenkungssignal 130 mit mehr überlappenden Zeitblöcken $120_1$ bis $120_3$ prädizieren kann. So kann beispielsweise die Vorrichtung 100 vorgeben, dass die Zeitblöcke $120_1$ bis $120_3$ eine Blockgröße von 10 ms (es sind beispielsweise Blockgrößen $\geq$ 5 ms, $\geq$ 8 ms oder $\geq$ 10 ms vorteilhaft) aufweisen, wodurch die Vorrichtung 100 so viele Membranauslenkungssignalblöcke $130_1$ bis $130_3$ erhalten kann, so dass das komplette Lautsprechersignal 110 (beispielsweise die komplette Zeitdauer des Lautsprechersignals 110) durch die Zeitblöcke $120_1$ bis $120_3$ mit einer von der Vorrichtung 100 festgesetzten Blocklänge komplett wiederspiegeln kann. Somit kann beispielsweise das Membranauslenkungssignal 130 definieren, wie stark zu jedem Zeitpunkt das Lautsprechersignal 110 an einem Lautsprecher eine Membran auslenken würde.

Ferner kann die Vorrichtung 100 konfiguriert sein, um eine zeitliche Position 140 einer maximalen Auslenkung eines aktuellen Membranauslenkungssignalblocks $130_2$ eines aktuellen Zeitblocks $120_2$ innerhalb eines Überlappbereichs 124 mit einem nachfolgenden Zeitblock $120_3$ zu ermitteln. Somit kann die Vorrichtung 100 beispielsweise innerhalb des Überlappbereichs 124 des aktuellen Zeitblocks $120_2$ den aktuellen Membranauslenkungssignalblock $130_2$ nach einer maximalen Auslenkung abtasten. Diese maximale Auslenkung kann beispielsweise zu einer Membranüberauslenkung führen, wenn die Vorrichtung 100 das Membranauslenkungssignal 130 nicht modifiziert.

Die Vorrichtung 100 kann konfiguriert sein, um für den aktuellen Zeitblock $120_2$ unter Berücksichtigung eines Vergleichs des aktuellen Membranauslenkungssignalblocks $130_2$ mit einem nachfolgenden Membranauslenkungssignalblock $130_3$ oder einer Schätzung des nachfolgenden Membranauslenkungssignalblocks $130_3$ aus dem aktuellen Membranauslenkungssignalblock $130_2$ an der zeitlichen Position einen Pegel 150a zu berechnen (beispielsweise mit der Verarbeitungseinrichtung 150), bis zu welchem der aktuelle Membranauslenkungssignalblock $130_2$ ohne Membranüberauslenkung aussteuerbar ist. Durch den Pegel 150a kann die Vorrichtung 100 bestimmen, wie stark der aktuelle Membranauslenkungssignalblock $130_2$ beispielsweise gedämpft werden sollte, um in einem zu dem nachfolgenden Membranauslenkungssignalblock $130_3$ passenden Verhältnis den aktuellen Membranauslenkungssignalblock $130_2$ zu dämpfen, so dass eine hohe Klangqualität durch die Vorrichtung 100 erhalten bleiben kann.

Ferner kann die Vorrichtung 100 konfiguriert sein, um den aktuellen Membranauslenkungssignalblock $130_2$ auf Basis des Pegels 150a zu dämpfen, um einen modifizierten aktuellen Membranauslenkungssignalblock $160_2$ zu erhalten. Dies kann die Vorrichtung beispielsweise für jeden Membranauslenkungssignalblock $130_1$ bis $130_3$ durchführen, um beispielsweise gemäß Fig. 1 drei modifizierte Membranauslenkungssignalblöcke $160_1$ bis $160_3$ zu erhalten. Die modifizierten Membranauslenkungssignalblöcke $160_1$ bis $160_3$ können ein modifiziertes Membranauslenkungssignal 160 definieren.

Ferner kann die Vorrichtung 100 konfiguriert sein, um ein modifiziertes Lautsprechersignal 170 auf Basis des modifizierten aktuellen Membranauslenkungssignalblocks $160_2$ zu synthetisieren. Hierfür kann die Vorrichtung 100 beispielsweise aus jedem modifizierten Membranauslenkungssignalblock $160_1$, $160_2$ einen modifizierten Lautsprechersignalblock $170_1$, $170_2$ synthetisieren und beispielsweise mit einem Overlap-Add-Verfahren zu dem modifizierten Lautsprechersignal 170 zusammenfügen. Alternativ kann die Vorrichtung 100 konfiguriert sein, um zunächst die modifizierten Membranauslenkungssignalblöcke $160_1$, $160_2$ mit dem Overlap-Add-Verfahren zu dem modifizierten Membranauslenkungssignal 160 zusammenzufügen und um aus dem modifizierten Membranauslenkungssignal 160 in einem Schritt das komplette modifizierte Lautsprechersignal 170 zu synthetisieren. Optional kann die Vorrichtung 100 das so modifizierte Lautsprechersignal 170 bereitstellen und beispielsweise an einen Lautsprecher übertragen.

Gemäß einem Ausführungsbeispiel kann die Vorrichtung 100 konfiguriert sein, um zur Berechnung des Pegels 150a einen Quotienten zwischen dem aktuellen Membranauslenkungssignalblock $130_2$ an der zeitlichen Position 140 einerseits und einer Summe des nachfolgenden Membranauslenkungssignalblocks $130_3$ oder der Schätzung des nachfolgenden Membranauslenkungssignalblocks $130_3$ an der zeitlichen Position 140 und dem aktuellen Membranauslenkungssigna!b!ock $130_2$ an der zeitlichen Position 140 andererseits zu bestimmen. Dieser Schritt kann beispielsweise mit der Verarbeitungseinrichtung 150 durchgeführt werden. Der Quotient kann beispielsweise definieren, in welchem Verhältnis der aktuelle Membranauslenkungssignalblock $130_2$ zu dem nachfolgenden Membranauslenkungssignalblock $130_3$ an der zeitlichen Position 140 steht. Der so berechnete Pegel 150a kann demnach definieren, wie stark der aktuelle Membranauslenkungssignalblock $130_2$ mindestens gedämpft werden sollte, damit eine hohe Klangqualität bei Vermeidung einer Membranüberauslenkung erhalten bleiben kann.

Gemäß einem Ausführungsbeispiel kann die Vorrichtung 100 konfiguriert sein, um den Quotienten mit einem Sicherheitsfaktor zu skalieren. Dadurch kann beispielsweise eine stärke Dämpfung des Membranauslenkungssignals 130 hervorgerufen werden, wodurch ein mechanischer Schutz einer Membran eines Lautsprechers vor Membranüberauslenkung erhöht werden kann. Dieser Schritt kann beispielsweise mit der Verarbeitungseinrichtung 150 durchgeführt werden.

Gemäß einem Ausführungsbeispiel kann die Vorrichtung 100 konfiguriert sein, um den aktuellen Membranauslenkungssignalblock $130_2$ in zumindest einen Frequenzbandsignalzeitblock zu zerlegen. Dies kann beispielsweise mit der Verarbeitungseinrichtung 150 erfolgen. Somit kann die Vorrichtung 100 den aktuellen Membranauslenkungssignalblock $130_2$ in zumindest ein Frequenzband zerlegen, wobei der zumindest eine Frequenzbandsignalzeitblock ein Frequenzband des aktuellen Membranauslenkungssignalblocks $130_2$ für den kompletten aktuellen Zeitblock $120_2$ darstellen kann. Somit kann der aktuelle Membranauslenkungssignalblock $130_2$ beispielsweise von der Vorrichtung 100 in mehrere Frequenzbandsignalzeitblöcke zerlegt werden, die alle den kompletten aktuellen Zeitblock $120_2$ und ein voneinander unterschiedliches Frequenzband des aktuellen Membranauslenkungssignalblocks $130_2$ darstellen können. Durch dieses Merkmal kann ermöglicht werden, dass die Vorrichtung 100 den aktuellen Membranauslenkungssignalblock $130_2$ so dämpfen bzw. modifizieren kann, dass es zu keinen oder nur geringen Nicht-Linearitäten in dem modifizierten aktuellen Membranauslenkungssignalblock $160_2$ kommt. Hierdurch kann durch die Vorrichtung 100 eine hohe Klangqualität gewährleistet werden. Dieses hierin beschriebene Merkmal kann beispielsweise eine Frequenzbandzerlegung 151 durch die Verarbeitungseinrichtung 150 darstellen.

Gemäß einem Ausführungsbeispiel kann die Vorrichtung 100 konfiguriert sein, um für jeden des zumindest einen Frequenzbandsignalzeitblocks zumindest eine weitere zeitliche Position 142 zu ermitteln; an der eine vorbestimmte Signalkombination (z. B. des aktuellen Membranauslenkungssignalblocks $130_2$ mit dem vorangegangenen modifizierten

Membranauslenkungssignalblock $160_1$) einen maximalen Auslenkungsgrenzwert überschreitet, und zwar in dem ersten Überlappbereich 122 des aktuellen Zeitblocks $120_2$ mit dem vorangegangenen Zeitblock $120_1$ sowie in dem restlichen Zeitblock $120_2$ (z. B. auch in dem Überlappbereich 124). Die vorbestimmte Signalkombination kann beispielsweise einen Overlapp-Add des aktuellen Membranauslenkungssignalblocks $130_2$ mit dem modifizierten vorangegangenen Membranauslenkungssignalblock $160_1$ in dem ersten Überlappbereich 122 darstellen. Der maximale Auslenkungsgrenzwert kann beispielsweise definieren, ab wann z. B. eine Amplitude des aktuellen Membranauslenkungssignalblocks $130_2$ zu einer Membranüberauslenkung führen würde, wenn die Vorrichtung 100 den aktuellen Membranauslenkungssignalblock $130_2$ nicht dämpfen bzw. modifizieren würde. Somit kann ermöglicht werden, dass pro Frequenzbandsignalzeitblock zumindest eine weitere zeitliche Position 142, die beispielsweise auch als kritische zeitliche Position bezeichnet werden kann, ermittelt wird, wodurch die Vorrichtung 100 bestimmen kann, wie der zumindest eine Frequenzbandsignalzeitblock modifiziert bzw. gedämpft werden sollte, damit eine Membranüberauslenkung vermieden werden kann und somit ein guter mechanischer Schutz für Lautsprecher durch die Vorrichtung 100 gewährleistet werden kann. Dieses Merkmal kann beispielsweise mittels einer Positionsermittlung 152 der Verarbeitungseinrichtung 150 erfolgen.

Gemäß einem Ausführungsbeispiel kann die Signalkombination eine additive Kombination des aktuellen Membranauslenkungssignalblocks $130_2$ mit einem modifizierten vorangegangenen Membranauslenkungssignalblock $160_1$ und eine additive Kombination des jeweiligen Frequenzbandsignalzeitblocks mit dem modifizierten vorangegangenen Membranauslenkungssignalblock $160_1$ und eine additive Kombination eines Betrags des aktuellen Membranauslenkungssignalblocks $130_2$ mit einem Betrag des modifizierten vorangegangenen Membranauslenkungssignalblocks $160_1$ umfassen. Somit sollte z. B. mindestens eine der drei additiven Kombinationen an der weiteren zeitlichen Position 142 den maximalen Auslenkungsgrenzwert überschreiten. Den drei additiven Kombinationen liegt die Erkenntnis zugrunde, dass Auslenkungsspitzen (beispielsweise maximale Auslenkungen) eines Frequenzbandsignalzeitblocks sich bei einer Superposition aufgrund einer Phasenlage auslöschen und in dem aktuellen Membranauslenkungssignalblock $130_2$ unsichtbar sein können. Ferner kann mit den drei additiven Kombinationen bedacht werden, dass Auslenkungsspitzen in hochfrequenten Frequenzbandsignalzeitblöcken ausreichend stark gedämpft werden sollten und Auslenkungsspitzen in dem aktuellen Membranauslenkungssignalblock $130_2$ durch nahe beieinanderliegende Extrema in den einzelnen Frequenzbandsignalzeitblöcken verschmiert sein können. Somit kann durch die drei additiven Kombinationen der Signalkombination zumindest eine weitere zeitliche Position 142 mit der Vorrichtung 100 ermittelt werden, an der eine Membranüberauslenkung auftreten kann und somit von der Vorrichtung 100 modifiziert werden sollte.

Gemäß einem Ausführungsbeispiel kann die Vorrichtung 100 konfiguriert sein, um einen Dämpfungsfaktor für jeden des zumindest einen Frequenzbandsignalzeitblocks, basierend auf dem Pegel 150a und der weiteren zeitlichen Position 142 zu bestimmen, um den aktuellen Membranauslenkungssignalblock $130_2$ zu dämpfen. Dies kann mit der Dämpfungsfaktorenermittlung 153 erfolgen. Somit kann beispielsweise die Dämpfungsfaktorenermittlung 153 von der Positionsermittlung 152 die zumindest eine weitere zeitliche Position 142 pro Frequenzbandsignalzeitblock erhalten und von der Verarbeitungseinrichtung 150 den Pegel 150a erhalten. Somit kann ermöglicht werden, dass bei einer Optimierung der Dämpfungsfaktoren eine Verwendung von zufälligen Startwerten vermieden werden kann und stattdessen Auslenkungswerte an der weiteren zeitlichen Position 142 verwendet werden können, was die Optimierung beschleunigen kann. Somit ist die Vorrichtung 100 ausgelegt, um sehr effizient z. B. bei Gewährleistung hoher Klangqualität des Membranauslenkungssignals 130 so zu modifizieren bzw. zu dämpfen, dass eine Membranüberauslenkung hervorgerufen durch das Lautsprechersignal 110 vermieden werden kann.

Gemäß einem Ausführungsbeispiel kann die Vorrichtung 100 konfiguriert sein, um den Dämpfungsfaktor pro Frequenzbandsignalzeitblock für den aktuellen Zeitblock $120_2$ mit einer Version des Dämpfungsfaktors pro Frequenzbandsignalzeitblock für den vorangegangenen Zeitblock $120_1$, verringert in Dämpfungsstärke durch eine vorbestimmte Abklingfunktion, zu vergleichen und für den aktuellen Zeitblock $120_2$ unter denselben einen gewählten Dämpfungsfaktor zu verwenden, der mit einer höheren Dämpfung verbunden sein kann. Somit kann hier beispielsweise bedacht werden, dass eine Dämpfung des vorangegangenen Membranauslenkungssignalblocks $130_1$ eine Abklingfunktion aufweisen kann, die auch eine Dämpfung des aktuellen Membranauslenkungssignalblocks $130_2$ durch die Vorrichtung 100 beeinflussen kann, wodurch beispielsweise der aktuelle Membranauslenkungssignalblock $130_2$ beispielsweise mit den Dämpfungsfaktoren verringert in Dämpfungsstärke durch die vorbestimmte Abklingfunktion bereits ausreichend gedämpft werden können, um eine Membranüberauslenkung zu vermeiden. Somit können mit diesem Merkmal die Dämpfungsfaktoren so gewählt werden, dass der aktuelle Membranauslenkungssignalblock $130_2$ ausreichend stark gedämpft wird durch die Vorrichtung 100, um eine Membranüberauslenkung zu vermeiden und somit einen guten mechanischen Schutz durch die Vorrichtung 100 für einen Lautsprecher zu bieten. Dies kann mit der Dämpfungsfaktorenermittlung 153 erfolgen.

Die Vorrichtung 100 kann beispielsweise das Membranauslenkungssignal 130 mit Attack-, Hold- und Release-Funktionen dämpfen. Durch kurze Attack-Zeiten kann der aktuelle Membranauslenkungssignalblock $130_2$ sehr schnell gedämpft werden, die Dämpfung für kurze Zeit mittels der Hold-Funktion gehalten werden und mit der Release-Funktion wieder aufgehoben werden. So kann beispielsweise eine Attack-Zeit von 0 Sekunden verwendet werden, damit das modifizierte Lautsprechersignal 170, das die Vorrichtung 100 bereitstellen kann, keine ungedämpften Membranauslenkungsamplituden aufweist, die zu einer Membranüberauslenkung führen könnten. Die Release-Zeit kann von den ermittelten Dämpfungsfaktoren abhängig sein. So können beispielsweise langgezogene Töne lange Zeitkonstanten benötigen, um keine Modulation zu verursachen und perkussionsartige Geräusche können eher kurze Zeitkonstanten benötigen. Die Release-Zeit kann die Dämpfungsfaktoren der einzelnen Frequenzbandsignalzeitblöcke überwachen, indem die Dämpfungsfaktoren des aktuellen Zeitblocks $120_2$ mit der Version der Dämpfungsfaktoren des vorangegangenen Zeitblocks $120_1$, verringert in Dämpfungsstärke durch eine vorbestimmte Abklingfunktion, verglichen werden. Steigt beispielsweise die Membranauslenkung des aktuellen Membranauslenkungssignalblocks $130_2$ an, so können die Dämpfungsfaktoren so angepasst werden, dass eine Membranüberauslenkung vermieden werden kann. Dies kann mit der Dämpfungsfaktorenermittlung 153 erfolgen.

Gemäß einem Ausführungsbeispiel kann die Vorrichtung 100 konfiguriert sein, um den aktuellen Membranauslenkungssignalblock $130_2$ in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen. Dies kann beispielsweise mit der Membranauslenkungssignalaufspaltung 154 vor der Frequenzbandzerlegung 151 erfolgen. Durch dieses Merkmal kann die Klangqualität verbessert werden, da beispielsweise kürzere Zeitkonstanten der vorbestimmten Abklingfunktion besser für perkussive Signale geeignet sind und längere Zeitkonstanten z. B. für harmonische Signale. Die Aufspaltung in den perkussiven Signalanteil an den harmonischen Signalanteil kann beispielsweise für den kompletten aktuellen Membranauslenkungssignalblock $130_2$ erfolgen oder für jeden Frequenzbandsignalzeitblock des aktuellen Membranauslenkungssignalblocks $130_2$ erfolgen.

Gemäß einem Ausführungsbeispiel kann die Vorrichtung 100 konfiguriert sein, um für jede der zumindest einen weiteren zeitlichen Position 142 einen ersten maximalen Auslenkungsanteil für den aktuellen Zeitbtock $120_2$ unter Berücksichtigung des maximalen Auslenkungsgrenzwerts und des modifizierten vorangegangenen Membranauslenkungssignalblocks $160_1$ zu berechnen. Dieser maximale Auslenkungsanteil kann für den aktuellen Membranauslenkungssignalblock $130_2$ bestimmen, wie stark der aktuelle Membranauslenkungssignalblock $130_2$ von der Vorrichtung 100 noch gedämpft werden sollte, damit bei einem Overlap-Add des Überlappbereichs 122 keine Membranüberauslenkung verursacht wird, und somit der modifizierte vorangegangene Membranauslenkungssignalblock $160_1$ mitberücksichtigt werden kann. Dies kann mit der Verarbeitungseinrichtung 150 erfolgen.

Gemäß einem Ausführungsbeispiel kann die Vorrichtung 100 konfiguriert sein, um den ersten maximalen Auslenkungsanteil aus einem Quotienten zwischen einer Differenz des maximalen Auslenkungsgrenzwerts, wobei ein Vorzeichen des maximalen Auslenkungsgrenzwerts von dem aktuellen Membranauslenkungssignalblock $130_2$ an der weiteren zeitlichen Position 142 abhängen kann, und des modifizierten vorangegangenen Membranauslenkungssignalblocks $160_1$ einerseits und dem maximalen Auslenkungsgrenzwert andererseits zu berechnen. Dies kann mit der Verarbeitungseinrichtung 150 erfolgen.

Gemäß einem Ausführungsbeispiel kann die Vorrichtung 100 konfiguriert sein, um aus dem modifizierten aktuellen Membranauslenkungssignalblock $160_2$ einen modifizierten aktuellen Lautsprechersignalblock $170_2$ zu berechnen und den modifizierten aktuellen Lautsprechersignalblock $170_2$ einem Overlap-Add mit dem modifizierten vorangegangenen Lautsprechersignalblock $170_1$ zu unterziehen, um eine modifiziertes Lautsprechersignal 170 zu synthetisieren. Bei der Berechnung des aktuellen Lautsprechersignalblocks $170_2$ existiert z. B. noch kein nachfolgender modifizierter Lautsprechersignalblock $170_3$. Somit kann eine Ausgabe an einen Lautsprecher z. B. die Überlappung des vorangegangenen modifizierten Lautsprechersignalblocks $170_1$ mit einem ersten Teil des aktuellen modifizierten Lautsprechersignalblocks $170_2$ sein, wobei der erste Teil z. B. ein Überlappbereich 122 des aktuellen Zeitblocks $120_2$ mit dem vorrangegangenen Zeitblock $120_1$ sein kann.

Gemäß einem Ausführungsbeispiel kann die Vorrichtung 100 konfiguriert sein, um anstelle des modifizierten aktuellen Lautsprechersignalblocks $170_2$ ein aktuelles Lautsprechersignal 110 bereitzustellen, wenn eine maximale Auslenkung des aktuellen Membranauslenkungssignalblocks $130_2$ des aktuellen Zeitblocks $120_2$ einen maximalen Auslenkungsgrenzwert nicht überschreitet. Somit kann die Vorrichtung 100 sehr effizient einen Lautsprecher vor Membranüberauslenkung schützen, indem die Vorrichtung 100 nur dann das aktuelle Lautsprechersignal 110 dämpft bzw. modifiziert, wenn die Vorrichtung 100 erkennt, dass eine Membranüberauslenkung durch das aktuelle Lautsprechersignal 110 an dem Lautsprecher hervorgerufen werden kann.

Gemäß einem Ausführungsbeispiel kann die Vorrichtung 100, um den aktuellen Membranauslenkungssignalblock $130_2$ zu dämpfen, ausgebildet sein, um einen oder mehrere Dämpfungsfaktoren basierend auf dem Pegel 150a zu berechnen (z. B. mit der Dämpfungsfaktorenermittlung 153) und um die einen oder mehreren Dämpfungsfaktoren mit dem aktuellen Membranauslenkungssignalblock $130_2$ zu verrechnen. Mit einer Verrechnungseinrichtung 155 können die einen oder mehreren Dämpfungsfaktoren mit dem aktuellen Membranauslenkungssignalblock $130_2$ so verrechnet werden, dass ein modifizierter aktueller Membranauslenkungssignalblock $160_2$ ermittelt werden kann, der nicht zu einer Membranüberauslenkung führen sollte.

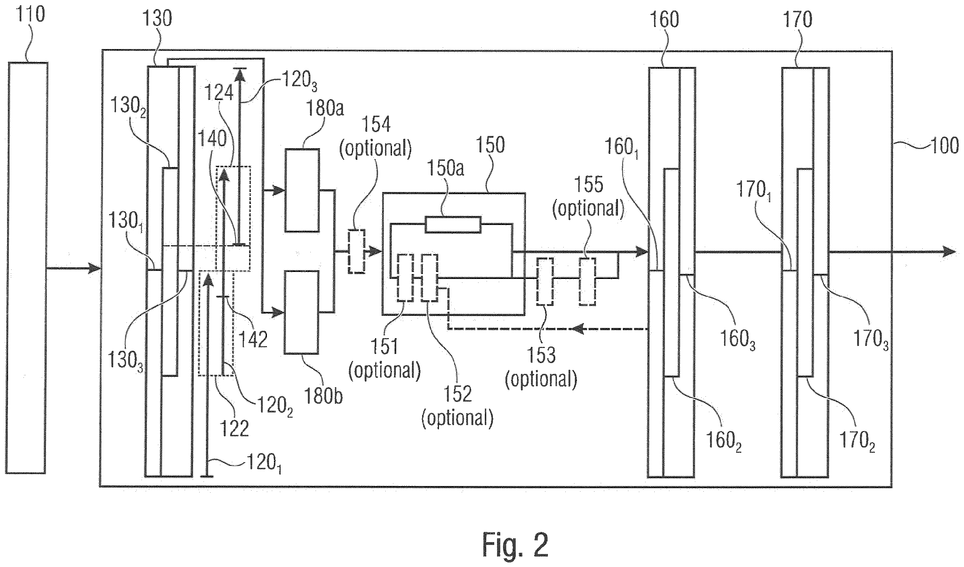

Fig. 2 zeigt eine schematische Darstellung einer Vorrichtung 100 zur Modifizierung eines Lautsprechersignals 110 zur Vermeidung einer Membranüberauslenkung, die Merkmale und Funktionalitäten gemäß der Vorrichtung 100 aus Fig. 1 aufweisen kann. Ferner kann die Vorrichtung 100 konfiguriert sein, um einen ersten maximalen Auslenkungsanteil 180a für einen aktuellen Membranauslenkungssignalblock $130_2$ eines aktuellen Zeitblocks $120_2$ in einem ersten

Überlappbereich 142 eines aktuellen Zeitblocks $120_2$ (z. B. des aktuellen Membranauslenkungssignalblocks $130_2$) mit einem vorangegangenen Zeitblock $120_1$ sowie in dem restlichen Bereich von dem aktuellen Membranauslenkungssignalblock $130_2$ zu bestimmen. Somit kann für den kompletten aktuellen Zeitblock $120_2$ bestimmt werden, wie stark die Vorrichtung 100 mindestens den aktuellen Membranauslenkungssignalblock $130_2$ dämpfen sollte, damit beispielsweise bei einem Overlap-Add des aktuellen modifizierten Membranauslenkungssignalblocks $160_2$ mit dem vorangegangenen modifizierten Membranauslenkungssignalblock $160_1$ keine Membranüberauslenkung an einem Lautsprecher verursacht wird. Der maximale Auslenkungsanteil kann somit angeben, wie groß ein Anteil des aktuellen Membranauslenkungssignalblocks $130_2$ an einem maximalen Auslenkungsgrenzwert aufweisen darf, damit der maximale Auslenkungsgrenzwert nicht überschritten wird und somit eine Membranüberauslenkung hervorgerufen werden kann. Dabei kann der maximale Auslenkungsgrenzwert definieren, wie groß eine Auslenkung nach einem Overlap-Add des aktuellen modifizierten Membranauslenkungssignalblocks $160_2$ und des vorangegangenen modifizierten Membranauslenkungssignalblocks $160_1$ maximal aufweisen darf, damit keine Membranüberauslenkung entsteht. Ein Verhältnis des ersten maximalen Auslenkungsanteils 180a zu einem restlichen Auslenkungsanteil (z. B. ein Auslenkungsanteil des vorangegangenen modifizierten Membranauslenkungssignalblocks $160_1$ an dem maximalen Auslenkungsgrenzwert) kann beispielsweise so gewählt sein, dass eine hohe Klangqualität erreicht werden kann.

Zudem kann die Vorrichtung 100 konfiguriert sein, um einen zweiten maximalen Auslenkungsanteil 180b für den aktuellen Membranauslenkungssignalblock $130_2$ des aktuellen Zeitblocks $120_2$ in einem zweiten Überlappbereich 124 des aktuellen Zeitblocks $120_2$ mit einem nachfolgenden Zeitblock $120_3$ zu bestimmen. Mit diesem Merkmal wird der Vorrichtung 100 ermöglicht, bereits vorausschauend den aktuellen Membranauslenkungssignalblock $130_2$ zu dämpfen bzw. zu modifizieren. So kann die Vorrichtung 100 beispielsweise feststellen, in welchem Verhältnis der aktuelle Membranauslenkungssignalblock $130_2$ zu dem nachfolgenden Membranauslenkungssignalblock $130_3$ steht und dementsprechend den aktuellen Membranauslenkungssignalblock $130_2$ dämpfen, wodurch eine hohe Klangqualität erreicht werden kann. Der zweite maximale Auslenkungsanteil 180b kann dieses Verhältnis aufweisen.

Ferner kann die Vorrichtung 100 konfiguriert sein, um einen Pegel 150a basierend auf dem ersten maximalen Auslenkungsanteil 180a zu berechnen, wenn der erste maximale Auslenkungsanteil 180a kleiner ist als der zweite maximale Auslenkungsanteil 180b oder um den Pegel 150a basierend auf dem zweiten maximalen Auslenkungsanteil 180b zu berechnen, wenn der zweite maximale Auslenkungsanteil 180b kleiner ist als der erste maximale Auslenkungsanteil 180a. Somit ist die Vorrichtung 100 beispielsweise konfiguriert, um eine größere Dämpfung anhand des ersten maximalen Auslenkungsanteils 180a und des zweiten maximalen Auslenkungsanteils 180b zu bestimmen und diese auszuwählen, um das Membranauslenkungssignal 130 zu dämpfen, um sicherzustellen, dass ein modifiziertes Membranauslenkungssignal 160 zu keiner Membranüberauslenkung führen kann. Dies erfolgt z. B. über eine Verarbeitungseinrichtung 150.

Gemäß einem Ausführungsbeispiel kann die Vorrichtung 100 konfiguriert sein, um den Pegel 150a, basierend auf dem ersten maximalen Auslenkungsanteil 180a, mittels eines Produkts aus dem maximalen Auslenkungsgrenzwert und dem ersten maximalen Auslenkungsanteil 180a zu berechnen oder um den Pegel 150a, basierend auf dem zweiten maximalen Auslenkungsanteil 180b, mittels eines Produkts aus dem maximalen Auslenkungsgrenzwert und dem zweiten maximalen Auslenkungsanteil 180b zu berechnen. Somit kann der Pegel 150a eine maximale Amplitude definieren, die der aktuelle Membranauslenkungssignalblock $130_2$ z. B. maximal aufweisen darf. Somit darf der aktuelle Membranauslenkungssignalblock $130_2$ den Pegel 150a nicht überschreiten. Die Pegelberechnung erfolgt z. B. über die Verarbeitungseinrichtung 150. Mit dem Pegel 150a kann die Vorrichtung 100 überprüfen, ob der aktuelle Membranauslenkungssignalblock $130_2$ modifiziert bzw. gedämpft werden sollte oder ohne Weiterverarbeitung bereitgestellt werden kann.

Gemäß einem Ausführungsbeispiel kann die Vorrichtung 100 konfiguriert sein, um eine zeitliche Position 140 einer maximalen Auslenkung des aktuellen Membranauslenkungssignalblocks $130_2$ des aktuellen Zeitblocks $120_2$ innerhalb des zweiten Überlappbereichs 124 mit dem nachfolgenden Zeitblock $120_3$ zu ermitteln; und um für den zweiten maximalen Auslenkungsanteil 180b einen Quotienten zwischen dem aktuellen Membranauslenkungssignalblock $130_2$ an der zeitlichen Position 140 einerseits und einer Summe eines nachfolgenden Membranauslenkungssignalblocks $130_3$ oder einer Schätzung des nachfolgenden Membranauslenkungssignalblocks $130_3$ an der zeitlichen Position 140, basierend auf dem aktuellen Membranauslenkungssignalblock $130_2$ des aktuellen Zeitblocks $120_2$, und dem aktuellen Membranauslenkungssignalblock $130_2$ an der zeitlichen Position 140 andererseits zu bestimmen. Gemäß einem Ausführungsbeispiel kann die Vorrichtung 100 konfiguriert sein, um den Quotienten mit einem Sicherheitsfaktor zu skalieren. Die zeitliche Position kann z. B. über die Verarbeitungseinrichtung 150 ermittelt werden.

Gemäß einem Ausführungsbeispiel kann die Vorrichtung 100 konfiguriert sein, um den zweiten maximalen Auslenkungsanteil 180b auf Basis des aktuellen Membranauslenkungssignalblocks $130_2$ zu schätzen. Somit wird beispielsweise, um den zweiten maximalen Auslenkungsanteil 180b zu bestimmen, nicht der nachfolgende Membranauslenkungssignalblock $130_3$ benötigt, sondern nur der aktuelle Membranauslenkungssignalblock $130_2$. Dies ermöglicht eine Verbesserung der Effizienz der Vorrichtung 100 zur Modifizierung des Membranauslenkungssignals 130, um eine Membranüberauslenkung vermeiden zu können.

Gemäß einem Ausführungsbeispiel kann die Vorrichtung 100 konfiguriert sein, um den zweiten maximalen Auslenkungsanteil 180b auf Basis des aktuellen Membranauslenkungssignalblocks $130_2$ mittels eines neuralen Netzwerks zu schätzen. Durch die Verwendung eines neuronalen Netzwerks kann die Vorrichtung 100 trainiert werden und dadurch nicht nur sehr effizient eine Modifizierung des Membranauslenkungssignals 130 bewerkstelligen, sondern zusätzliche eine sehr genaue Modifizierung realisieren, wodurch eine Effizienzsteigerung/ein schnellerer Algorithmus erreicht werden kann.

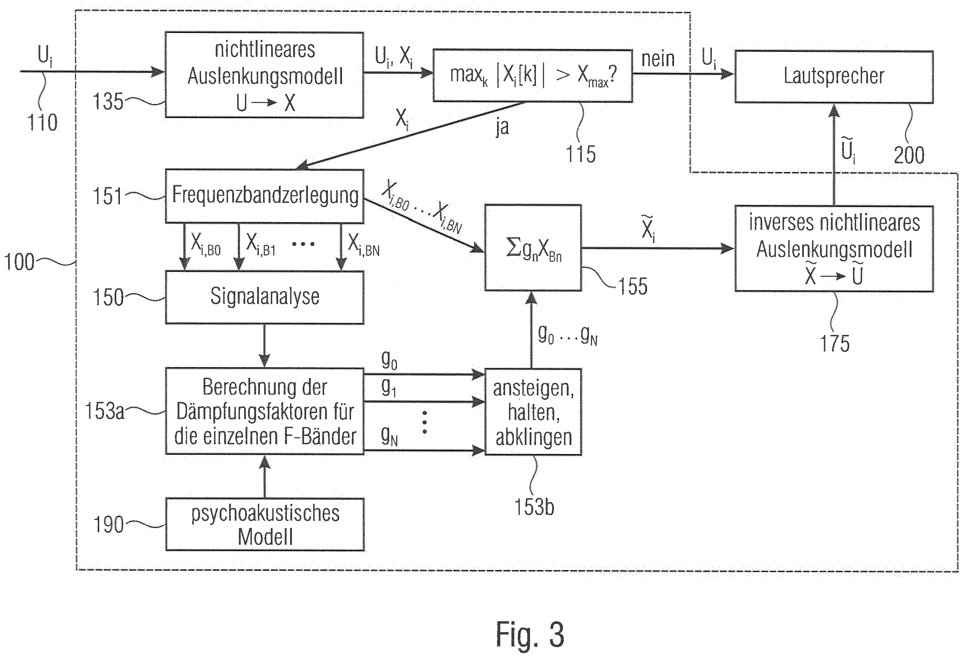

Fig. 3 zeigt ein Ausführungsbeispiel der Vorrichtung 100. In anderen Worten z. B. ein Gesamtsignalfluss in einem Auslenkungslimiter (z. B. die Vorrichtung 100).

Im Folgenden kann die Vorrichtung 100 auch als Auslenkungslimiter bezeichnet werden. Gemäß einem Ausführungsbeispiel kann die Vorrichtung 100 zur Modifizierung eines Lautsprechersignals U, 110 zur Vermeidung einer Membranüberauslenkung, z. B. $X > X_{max}$, konfiguriert sein, um blockweise, in überlappenden Zeitblöcken, auf Basis des Lautsprechersignals U, 110 ein Membranauslenkungssignal X zu prädizieren 135, um pro Zeitblock einen Membranauslenkungssignalblock $X_i$ zu erhalten. Hierbei kann z. B. das komplette Lautsprechersignal U, 110 von der Vorrichtung 100 erfasst werden oder blockweise, in überlappenden Zeitblöcken. So kann ein aktuelles Lautsprechersignal eines aktuellen Zeitblocks beispielsweise als $U_i$ bezeichnet werden und $X_i$ als ein aktueller Membranauslenkungssignalblock, eines gleichen Zeitblocks, bezeichnet werden. Dabei kann i eine positive ganze Zahl sein. Das Membranauslenkungssignal X kann dieselben Merkmale und Funktionalitäten, wie das Membranauslenkungssignal 130 aus Fig. 1 oder Fig. 2 aufweisen und der aktuelle Membranauslenkungssignalblock $X_i$ kann dieselben Merkmale und Funktionalitäten, wie der Membranauslenkungssignalblock $130_2$ aus Fig. 1 oder Fig. 2. Das Prädizieren 135 des Membranauslenkungssignals X kann z. B. mittels eines nichtlinearen Auslenkungsmodells erfolgen.

Die Vorrichtung 100 kann konfiguriert sein, um eine zeitliche Position $k_0$ einer maximalen Auslenkung $X_i[k_0]$ eines aktuellen Membranauslenkungssignalblocks $X_i$ eines aktuellen Zeitblocks i innerhalb eines Überlappbereichs mit einem nachfolgenden Zeitblock i+1 zu ermitteln. Dies erfolgt z. B. in der Signalanalyse 150.

Die Vorrichtung 100 kann konfiguriert sein, um für den aktuellen Zeitblock i unter Berücksichtigung eines Vergleichs des aktuellen Membranauslenkungssignalblocks (z. B. $X_i[k_0]$) mit einem nachfolgenden Membranauslenkungssignalblock (z. B. $X_{i+1}[k_0-M_{step}]$) oder einer Schätzung des nachfolgenden Membranauslenkungssignalblocks (z. B. $X_{i+1}[k_0-M_{step}]$) aus dem aktuellen Membranauslenkungssignalblock $X_i$ an der zeitlichen Position (z. B $k_0$ in dem aktuellen Zeitblock i und $k_0-M_{step}$ in dem nachfolgenden Zeitblock i+1, wobei $k_0$ und $k_0-M_{step}$ in dem Überlappbereich der beiden Zeitblöcke für den jeweiligen Membranauslenkungssignalblock den korrespondierenden Zeitpunkt darstellen.) einen Pegel (z. B. $h_l X_{max}$) zu berechnen, bis zu welchem der aktuelle Membranauslenkungssignalblock $X_i$ ohne Membranüberauslenkung aussteuerbar ist. Dies kann in der Signalanalyse 150 erfolgen.

Ferner kann die Vorrichtung 100 konfiguriert sein, um den aktuellen Membranauslenkungssignalblock $X_i$ auf Basis des Pegels ($h_l X_{max}$) zu dämpfen, um einen modifizierten aktuellen Membranauslenkungssignalblock $\tilde{X}_i$ zu erhalten. Dies kann mit der Verrechnungseinrichtung 155 erfolgen.

Des Weiteren kann die Vorrichtung 100 konfiguriert sein, um ein modifiziertes Lautsprechersignal $\tilde{U}$ auf Basis des modifizierten aktuellen Membranauslenkungssignalblocks $\tilde{X}_i$ zu synthetisieren 175. Hierbei kann z. B. das komplette modifizierte Lautsprechersignal $\tilde{U}$ basierend auf einem komplett modifizierten Membranauslenkungssignal $\tilde{X}$ synthetisiert 175 werden oder blockweise, in überlappenden Zeitblöcken, so dass ein aktuelles modifiziertes Lautsprechersignal $\tilde{U}_i$ beispielsweise basierend auf dem aktuellen modifizierten Membranauslenkungssignalblock $\tilde{X}_i$, eines gleichen Zeitblocks, synthetisiert 175 werden. Dabei kann i eine positive ganze Zahl sein und das komplette modifizierte Membranauslenkungssignal $\tilde{X}$ den aktuellen Membranauslenkungssignalblock $\tilde{X}_i$ aufweisen. Das modifizierte Membranauslenkungssignal $\tilde{X}$ kann dieselben Merkmale und Funktionalitäten, wie das modifizierte Membranauslenkungssignal 160 aus Fig. 1 oder Fig. 2 aufweisen, der aktuelle modifizierte Membranauslenkungssignalblock $\tilde{X}_i$ kann dieselben Merkmale und Funktionalitäten, wie der aktuelle modifizierte Membranauslenkungssignalblock $160_2$ aus Fig. 1 oder Fig. 2 aufweisen, das modifizierte Lautsprechersignal $\tilde{U}$ kann dieselben Merkmale und Funktionalitäten, wie das modifizierte Lautsprechersignal 170 aus Fig. 1 oder Fig. 2 aufweisen und das aktuelle modifizierte Lautsprechersignal $\tilde{U}_i$ kann dieselben Merkmale und Funktionalitäten, wie das aktuelle modifizierte Lautsprechersignal $170_2$ aus Fig. 1 oder Fig. 2 aufweisen. Das Synthetisieren 175 des modifizierten Lautsprechersignals $\tilde{U}$ kann z. B. mittels eines inversen nichtlinearen Auslenkungsmodells erfolgen. Optional kann das modifizierte Lautsprechersignal $\tilde{U}$ oder das aktuelle modifizierte Lautsprechersignal $\tilde{U}_i$ von der Vorrichtung 100 an einen Lautsprecher 200 übertragen werden.

Optional kann die Vorrichtung 100 konfiguriert sein, um anstelle des modifizierten aktuellen Lautsprechersignalblocks $\tilde{U}_i$, ein aktuelles Lautsprechersignal $U_i$ bereitzustellen und z. B. an den Lautsprecher 200 zu übertragen, wenn eine maximale Auslenkung des aktuellen Membranauslenkungssignalblocks $X_i$ des aktuellen Zeitblocks i einen maximalen Auslenkungsgrenzwert $X_{max}$ nicht überschreitet [z. B. $\max_k |X_i[_k]| < X_{max}$], was die Vorrichtung 100 mit einer Abfrage 115 durchführen kann.

Ferner kann die Vorrichtung 100 konfiguriert sein, um den aktuellen Membranauslenkungssignalblock ($X_i$) in zumindest einen Frequenzbandsignalzeitblock ($X_{i,B0}$ bis $X_{i,BN}$, mit N Frequenzbandsignalzeitblöcken, wobei N eine positive ganze Zahl ist) mit einer Frequenzbandzerlegung 151 zu zerlegen.

Gemäß einem Ausführungsbeispiel kann die Vorrichtung konfiguriert sein, um für jeden des zumindest einen Frequenzbandsignalzeitblocks $X_{i,B0}$ bis $X_{i,BN}$ zumindest eine weitere zeitliche Position ($k_{c,I}$) zu ermitteln, an der eine vorbestimmte Signalkombination einen maximalen Auslenkungsgrenzwert $X_{max}$ überschreitet, und zwar in dem ersten Überlappbereich des aktuellen Zeitblocks i mit dem vorangegangenen Zeitblock i-1 sowie in dem restlichen Zeitblock i. Dies erfolgt z. B. mittels der Signalanalyse 150.

Gemäß einem Ausführungsbeispiel kann die Vorrichtung 100 konfiguriert sein, um einen Dämpfungsfaktor $g_0$ bis $g_N$ für jeden des zumindest einen Frequenzbandsignalzeitblocks $X_{i,B0}$ bis $X_{i,BN}$, basierend auf dem Pegel $h_I X_{max}$ und der weiteren zeitlichen Position ($k_{c,I}$) zu bestimmen, um den aktuellen Membranauslenkungssignalblock $X_i$ zu dämpfen. Dies erfolgt z. B. mittels der Dämpfungsfaktorenermittlung 153a.

Gemäß einem Ausführungsbeispiel kann die Vorrichtung 100 konfiguriert sein, um einen Dämpfungsfaktor $g_0$ bis $g_N$ pro Frequenzbandsignalzeitblock $X_{i,B0}$ bis $X_{i,BN}$ für den aktuellen Zeitblock i mit einer Version des Dämpfungsfaktors $g_0$ bis $g_N$ pro Frequenzbandsignalzeitblock $X_{i,B0}$ bis $X_{i,BN}$ für den vorangegangenen Zeitblock i-1, verringert in Dämpfungsstärke durch eine vorbestimmte Abklingfunktion, zu vergleichen und für den aktuellen Zeitblock unter denselben einen gewählten Dämpfungsfaktor $g_0$ bis $g_N$ zu verwenden, der mit einer höheren Dämpfung verbunden ist. Dies erfolgt z. B. über die Attack-, Hold- und Release-Funktionen 153b. Falls gemäß einem Ausführungsbeispiel gilt, dass ein aktuelles $g_n$ kleiner einem alten $g_n$ ist, sollten die Attack-, Hold- und Release-Funktionen 153b das aktuelle $g_n$ wählen, ansonsten sollte weiter der Release-Funktion gefolgt werden, wobei beispielsweise ein höherer Dämpfungsfaktor $g_n$ eine kleinere Dämpfung verursachen kann. Gemäß eines Ausführungsbeispiel kann ein Dämpfungsfaktor $g = 1$ eine Dämpfung von 0 dB definieren und ein Dämpfungsfaktor $g = 0.1$ eine Dämpfung von 20 dB definieren.

Gemäß einem Ausführungsbeispiel kann die Dämpfungsfaktorenermittlung 153a und die Attack-, Hold- und Release-Funktionen 153b dieselben Merkmale und Funktionalitäten wie die Dämpfungsfaktorenermittlung 153 aus Fig. 1 oder Fig. 2 aufweisen.

Optional kann die Dämpfungsfaktorenermittlung 153a ein psychoakustisches Modell 190 nutzen, um eine Ermittlung der Dämpfungsfaktoren $g_0$ bis $g_N$ zu optimieren und dadurch die Klangqualität des modifizierten Lautsprechersignals $\tilde{U}$ bzw. des aktuellen Lautsprechersingnalblocks $\tilde{U}_i$ zu verbessern.

Somit kann das in Fig. 3 dargestellte Ausführungsbeispiel eine intelligente Signalanalyse 150 sowohl einer Gesamtauslenkung (z. B. des aktuellen Membranauslenkungssignalblocks $X_i$) als auch der Auslenkung in den jeweiligen Frequenzbändern (z. B. in den einzelnen Frequenzbandsignalzeitblöcken $X_{i,B0}$ bis $X_{i,BN}$) darstellen, die dafür sorgen kann, dass möglichst nahe an den Auslenkungsgrenzwert $X_{max}$ herangefahren werden kann, ohne unnötigen Headroom. Unter Headroom kann ein ungenutzter Anteil an einer maximalen Auslenkung einer Membran des Lautsprechers 200 verstanden werden. Somit wird beispielsweise die Membran kaum oder nie vollständig ausgelenkt, wenn Headroom vorliegt. Ist der Headroom zu groß, kann an dem Lautsprecher keine hohe Leistungsfähigkeit erreicht werden. Die Vorrichtung verursacht z. B. nur einen sehr kleinen bis keinen Headroom, wodurch eine sehr hohe Leistungsfähigkeit des Lautsprechers 200 erreicht werden kann. Ferner kann Fig. 3 ein System darstellen, das die besten Teilansätze zu einem optimalen Gesamtsystem kombinieren kann und eine separate Attack-, Hold- und Release-Regelung 153b für perkussive und harmonische Signalanteile aufweisen kann, die zu einer Verbesserung der Klangqualität führen.


**Vorverarbeitung**


In anderen Worten zeigt Fig. 3 ein Ausführungsbeispiel eines grundlegenden Signalflusses in dem erfindungsgemäßen Auslenkungslimiter 100. Eine Eingangsspannung U (z. B. das Lautsprechersignal U, 110) wird z. B. blockweise (z. B. in Zeitblöcken i) in das System (z. B. die Vorrichtung 100) gegeben. Die Zeitblöcke i können eine gemeinsame zeitliche Blockgröße aufweisen, die z. B. definiert, wie lang ein Zeitblock i ist. Blockgrößen $\geq 10$ ms haben sich bisher als besonders gut erwiesen. Es sind aber auch Blockgrößen von $\geq 50$ μs, $\geq 1$ ms, $\geq 5$ ms, $\geq 12$ ms, $\geq 15$ ms, $\geq 20$ ms oder $\geq 50$ ms möglich. Ein Spannungsverlauf im *i*-ten Block kann als $U_i$ bezeichnet werden. Der Spannungsverlauf im *i*-ten Block kann ein Beispiel für den aktuellen Lautsprechersignalblock $U_i$ in dem aktuellen Zeitblock i sein.

Um eine Geschwindigkeit von nachfolgenden Verarbeitungsschritten zu erhöhen, kann ggf. eine Tiefpassfilterung und Unterabtastung erfolgen, da hohe Frequenzen kaum relevant für eine Membranauslenkung sind.

Die Spannung $U_i$ wird z. B. als Eingangssignal eines nichtlinearen Auslenkungsmodells zur Prädiktion 135 der Auslenkung $X_i$ (des aktuellen Membranauslenkungssignalblocks $X_i$) genutzt. Das Auslenkungsmodell ermöglicht eine Steuerung ohne Feedback-Pfad. Mögliche Ausführung des Auslenkungsmodells sind ein einfaches Filter, ein physikalisches Strukturmodell (z. B. im Zustandsraum implementiert) oder ein Machine-Learning-Modell (z. B. Neuronales Netzwerk). Das Auslenkungsmodell ist nicht auf ein bestimmtes Aktorprinzip begrenzt - Modelle für elektrodynamische Lautsprecher, piezoelektrische Lautsprecher, elektrostatische Lautsprecher können modular eingesetzt werden. Das Auslenkungsmodell kann zudem adaptiv, also zeitlich veränderlich implementiert werden, um die Parameter stetig optimal an den Lautsprecher anzupassen. In diesem Fall kann die Vorrichtung einen Feedback-Pfad aufweisen. Alle hierin aufgeführten Aufzählungen der Auslenkungsmodelle und Aktorprinzipien sind hierbei als beispielhaft und nicht als abschließend anzusehen.

Wenn die prädizierte Auslenkung (z. B. eine Amplitude des aktuellen Membranauslenkungssignalblocks $X_i$)

den Grenzwert $X_{max}$ z. B. nicht überschreitet, wird das Eingangssignal direkt an den Lautsprecher gegeben. Ansonsten wird das prädizierte Auslenkungssignal z. B. weiterverarbeitet und in $N \geq 1$ benachbarte Frequenzbänder (z. B. die Frequenzbandsignalblöcke $X_{i,B0}$ bis $X_{i,BN}$) zerlegt. Dies entspricht beispielsweise der Funktionsweise einer Filterbank. Mögliche Implementierungen sind zum Beispiel aneinandergrenzende Bandpass-Filter oder auch Perfect Reconstruction Filter Banks wie MDCT (modifizierte diskrete Kosinustransformation) oder PQMF (Pseudo-Quadratur-Spiegel-Filter). Es ist zu beachten, dass diese Filterbank (z. B. die Frequenzbandzerlegung 151) und das psychoakustische Modell 190 möglichst die gleichen Frequenzbänder betrachten sollten. Alle hierin aufgeführten Aufzählungen der Methoden zur Zerlegung des prädizierten Auslenkungssignals $X_i$ in benachbarte Frequenzbänder (B0 bis BN, wobei N z. B. eine natürliche Zahl zwischen 1 und 100 ist.) sind hierbei als beispielhaft und nicht als abschließend anzusehen.

## Signalanalyse und Berechnung der Dämpfungsfaktoren

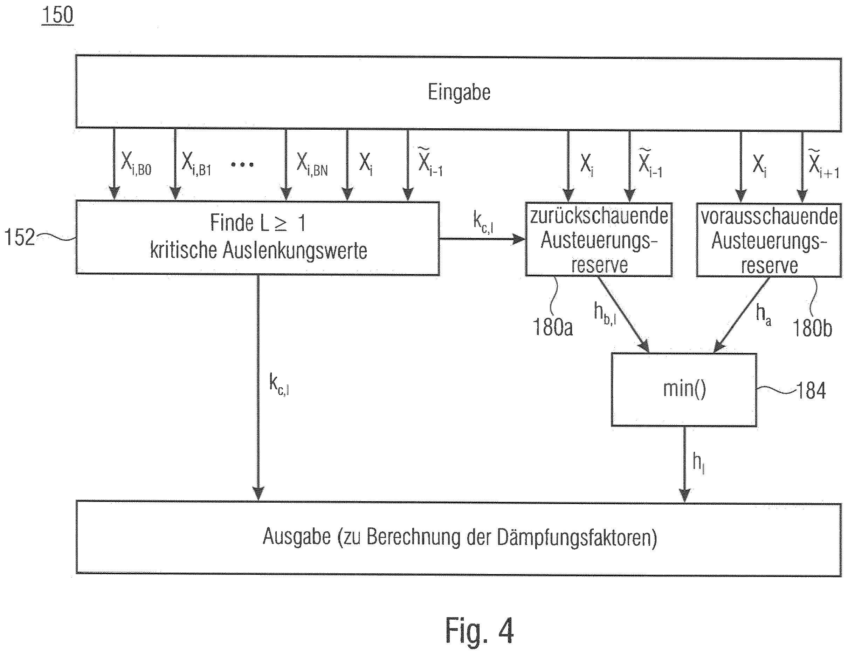

Zunächst erfolgt z. B. eine Signalanalyse 150 unter Einbezug aller Zeitsignale der einzelnen Frequenzbänder $X_{i,Bn}$ (wobei n eine natürliche Zahl zwischen 0 und N ist.) sowie der Gesamtauslenkungssignale $\tilde{X}_{i-1}$, $X_i$ und ggf. $X_{i+1}$ (wobei $\tilde{X}_{i-1}$ z. B. ein modifiziertes Gesamtauslenkungssignal des dem aktuellen Zeitblock i vorangegangenen Zeitblocks i-1 definiert). Ein Blockschaltbild für eine mögliche Ausführungsform wird in Fig. 4 dargestellt.

Fig. 4 zeigt ein Blockschaltbild, das einen Signalfluss z. B. der Vorrichtung in der Signalanalyse verdeutlicht, die dieselben Merkmale und Funktionalitäten wie die Verarbeitungseinrichtung 150 aus Fig. 1 oder Fig. 2 und wie die Signalanalyse 150 aus Fig. 3 aufweisen kann.

Zunächst wird z. B. aufgrund einer Overlap-Add-Verarbeitung betrachtet, wie groß die Gesamtdämpfung des aktuellen Blocks i mindestens sein sollte, damit keine Überschreitung von $X_{max}$ im Überlappungsbereich mit dem Folgeblock $i + 1$ auftritt. Dabei wird darauf geachtet, dass der Folgeblock i + 1 nicht zu stark gedämpft wird. Letztere Maßnahme ist nicht notwendig, um den Schutz des Wandlers zu garantieren, sondern um die Klangqualität zu maximieren. Der Look-Ahead-Headroom $h_a$ (z. B. der zweite maximale Auslenkungsanteil 180b, $h_a$) berechnet sich somit z. B. durch

$$k_o = \text{argmax}|X_i[M_{step} \ldots M_{block}]|$$

$$h_a = \frac{X_i[k_o]}{X_i[k_o] + X_{i+1}[k_o - M_{step}]} s \mid s \in [0;1]$$

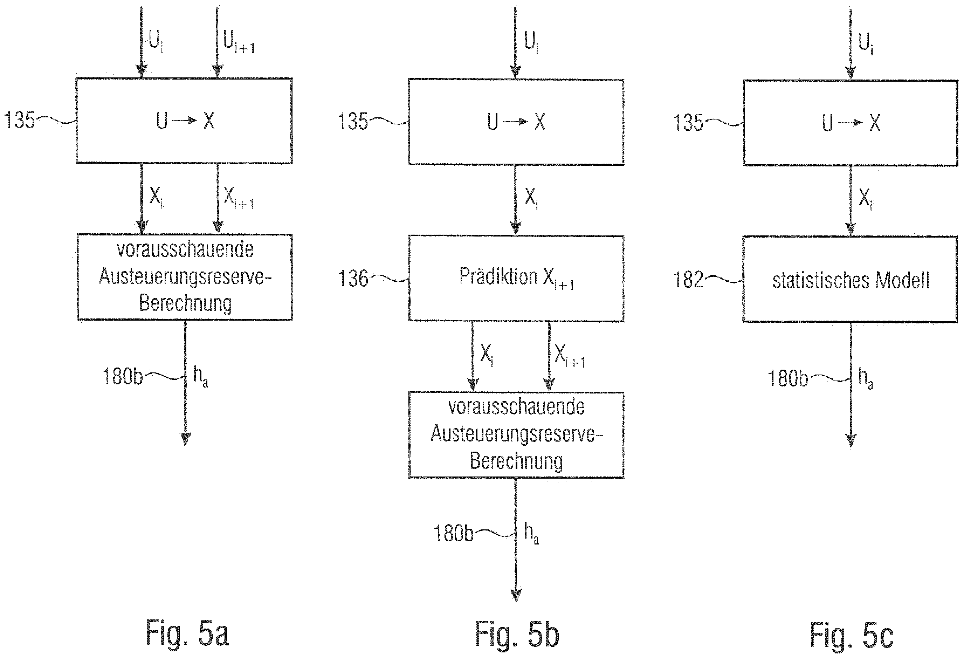

wobei $X_i$ das Zeitsignal der Gesamtauslenkung im $i$-ten Signalblock (z. B. der aktuelle Membranauslenkungssignalblock), $M_{block}$ die Blocklänge und $M_{step}$ die Schrittweite der Overlap-Add-Signalverarbeitung und $s$ einen parametrischen Sicherheitsfaktor darstellen können. Im Folgenden kann der zweite maximale Auslenkungsanteil 180b, $h_a$ auch als Look-Ahead-Headroom bezeichnet werden. Durch das Look-Ahead erhöht sich z. B. die Signalverzögerung um $M_{step}$ Samples. Ein entsprechendes Prädiktionsmodell für den künftigen Auslenkungsverlauf (z. B. den nachfolgenden Membranauslenkungssignalblock $X_{i+1}$) auf Basis des aktuellen Signalverlaufs (z. B. dem aktuellen Membranauslenkungssignalblock $X_i$), z. B. mittels eines Neuronalen Netzwerks, oder ein statistisches Modell für die direkte Prädiktion von $h_a$ auf Basis des aktuellen Signalblocks (z. B. dem aktuellen Membranauslenkungssignalblock $X_i$) könnte die Betrachtung des zweiten Signalblocks (z. B. dem nachfolgenden Membranauslenkungssignalblock $X_{i+1}$) erübrigen. Fig. 5a, Fig. 5b und Fig. 5c veranschaulichen mögliche Ausführungen der Look-Ahead-Headroom-Kalkulation 180b.

Fig. 5a, Fig. 5b und Fig. 5c zeigen Ausführungsformen der Look-Ahead-Headroom-Kalkulation. Mit Berechnung des künftigen Signalverlaufs (siehe Fig. 5a), mit Schätzung des künftigen Signalverlaufs auf Basis des aktuellen Signalblocks (siehe Fig. 5b), mit direkter Schätzung des Look-Ahead-Headrooms $h_a$ auf Basis des aktuellen Signalverlaufs (siehe Fig. 5c).

Somit zeigt Fig. 5a z. B. eine Berechnung des zweiten maximalen Auslenkungsanteil 180b, $h_a$ basierend auf einer Prädiktion 135 des aktuellen Membranauslenkungssignalblocks $X_i$, basierend auf dem aktuellen Lautsprechersignal $U_i$, und des narhfolgenden Membranauslenkungssignalblocks $X_{i+1}$, basierend auf dem nachfolgenden Lautsprechersignal $U_{i+1}$, wobei die Prädiktion 135 z. B. mittels einem nichtlinearen Auslenkungsmodell erfolgt. Somit kann von der Vorrichtung 100 sehr genau bestimmt werden, wie stark der aktuelle Membranauslenkungssignalblock $X_i$ gedämpft werden sollte, damit ein hoher mechanischer Schutz eines Wandlers (z. B. Membran, Aufhängung) des Lautsprechers 200 durch die Vorrichtung gewährleistet werden kann.

Fig. 5b zeigt z. B. eine Berechnung des zweiten maximalen Auslenkungsanteils 180b, $h_a$, bei der der nachfolgende Membranauslenkungssignalblock $X_{i+1}$ auf Basis des aktuellen Membranauslenkungssignalblock $X_i$ geschätzt 136 wird, wodurch die Berechnung des zweiten maximalen Auslenkungsanteils 180b, $h_a$ schneller und somit effizienter erfolgen kann. Aus dem aktuellen Membranauslenkungssignalblock $X_i$ und dem geschätzten nachfolgenden Membra-

nauslenkungssignalblock $X_{i+1}$ kann der zweite maximale Auslenkungsanteils 180b, $h_a$ mittels der Vorrichtung ermittelt werden. Die Schätzung 136 des nachfolgenden Membranauslenkungssignalblocks $X_{i+1}$ kann z. B. über ein neuronales Netzwerk erfolgen.

Fig. 5c zeigt z. B. eine Berechnung des zweiten maximalen Auslenkungsanteils 180b, $h_a$, bei der der zweite maximale Auslenkungsanteil 180b, $h_a$, basierend auf dem aktuellen Membranauslenkungssignalblock $X_i$ geschätzt 182 wird. Somit kann die Berechnung des zweiten maximalen Auslenkungsanteils 180b, $h_a$ noch schneller und effizienter erfolgen, da der nachfolgende Membranauslenkungssignalblock $X_{i+1}$ nicht für die Berechnung benötigt wird. Die Schätzung 182 kann z. B. über ein neuronales Netzwerk erfolgen.

Die Kalkulation des Look-Ahead-Headrooms $h_a$ baut explizit nicht auf den folgenden Signalanalyseschritten auf, kann also mit den entsprechenden Eingangssignalen separat erfolgen.

Gemäß Fig. 4 kann ein nächster Schritt in der Signalanalyse 150 gemäß einem Ausführungsbeispiel die Identifikation kritischer Auslenkungswerte 152 in den prädizierten Signalen (z. B. dem Membranauslenkungssignal X, wie z. B. $X_i$ und $X_{i+1}$, bzw. den Frequenzbandsignalblöcken $X_{i,B0}$ bis $X_{i,BN}$) umfassen, die später dazu dienen können, die Dämpfungsfaktoren für die einzelnen Frequenzbänder zu berechnen.

Zur Suche der kritischen Auslenkungswerte 152 (bzw. weiterer zeitlicher Positionen) dienen z. B. drei verschiedene Signalkombinationen (z. B. additive Kombinationen):

1. $X_{alt} + X_i$,
2. $X_{alt} + X_{i,B0} \ldots X_{alt} + X_{i,BN}$,
3. $|X_{alt}| + |X_i|$,

wobei

$$X_{alt}[k] = \begin{cases} \tilde{X}_{i-1}[k + M_{step}], & k < M_{block} - M_{step} \\ 0, & k \geq M_{block} - M_{step} \end{cases},$$

In den drei Signalkombinationen werden z. B. alle Extrema, welche die Auslenkungsgrenze $X_{max}$ überschreiten, als kritische Auslenkungswerte identifiziert. Auf diese Weise werden z. B. $L$ kritische Auslenkungswerte und deren Indizes $k_{c,l}$ mit $0 \leq l \leq L$ gefunden. Die kritischen Auslenkungswerte dienen dazu, eine Optimierung der Dämpfungsfaktoren mit zufälligen Startwerten zu vermeiden, was den Algorithmus beschleunigt.

Im Folgenden kann unter einem Look-Back-Headroom 180a ein erster maximaler Auslenkungsanteil verstanden werden. Gemäß einem Ausführungsbeispiel beginnt nun eine Verarbeitungsschleife mit $L$ Iterationen. Dabei wird zunächst z. B. für den $l$-ten kritischen Auslenkungswert mit dem Index $k_{c,l}$ der Look-Back-Headroom berechnet, also wie groß die Gesamtdämpfung des aktuellen Blocks $i$ mindestens sein sollte, damit die Überlappung mit dem vorhergehenden, bereits verarbeiteten Block $i - 1$ nicht zu einem Überschreiten des Grenzwerts $X_{max}$ führt. Der Look-Back-Headroom für den l-ten kritischen Auslenkungswert $h_{b,l}$ berechnet sich z. B. durch

$$h_{b,l} = \frac{\text{sign}(X_i[k_{c,l}])X_{max} - X_{alt}[k_{c,l}]}{X_{max}}$$

Ein finaler Headroom $h_l$, 184 für den l-ten kritischen Auslenkungswert berechnet sich z. B. zu

$$h_l = \text{sign}(X_i[k_{c,l}])\min(|h_{b,l}|, |h_a|).$$

Gemäß einem Ausführungsbeispiel kann die Vorrichtung somit konfiguriert sein, um einen Pegel ($h_l X_{max}$) basierend auf dem ersten maximalen Auslenkungsanteil ($h_{b,l}$) zu berechnen, wenn der erste maximale Auslenkungsanteil ($h_{b,l}$) kleiner ist als der zweite maximale Auslenkungsanteil ($h_a$) oder den Pegel ($h_l X_{max}$) basierend auf dem zweiten maximalen Auslenkungsanteil ($h_a$) zu berechnen, wenn der zweite maximalen Auslenkungsanteil ($h_a$) kleiner ist als der erste maximale Auslenkungsanteil ($h_{b,l}$).

Fig. 4 zeigt z. B. die Signalanalyse 150 aus Fig. 3 im Detail.

Gemäß Fig. 3 kann für jedes der $N$ Frequenzbänder dann z. B. jeweils ein linearer Dämpfungsfaktor $g_0$ bis $g_N$ mittels der Dämpfungsfaktorenermittlung 153a berechnet werden (linear heißt hier z. B., dass im jeweiligen Signalblock keine zusätzlichen Nichtlinearitäten eingeführt werden, was bei einem Kompressor der Fall wäre). Die Auslenkung in jedem Frequenzband wird dabei gemäß einem Ausführungsbeispiel mit einem psychoakustischen Modell 190 gewichtet, wodurch die Klangqualität und die Lautheit möglichst hoch bleiben soll. Das psychoakustische Modell 190 besteht in einer einfachen Variante z. B. aus der A-Bewertung nach DIN EN 61672-1 2003-10, kann aber auch eine nichtlineare Implementierung der Kurven gleicher Lautheit oder ein noch komplexeres Modell darstellen (z. B. Maskierung im Zeit- und Frequenzbereich). Alle hierin aufgeführten Aufzählungen der psychoakustischen Modelle sind hierbei als beispielhaft und nicht als abschließend anzusehen.

Auf diese Weise werden nun z. B. alle $L$ kritischen Auslenkungswerte abgearbeitet, bis z. B. eine optimale Reduktion der maximalen Gesamtauslenkung erreicht wird. Kann die Gesamtauslenkung auf Basis der kritischen Auslenkungswerte nicht unter den Grenzwert $h_i X_{max}$ gedrückt werden, kann ggf. eine LMS-Optimierung mit den bis dahin besten Dämpfungsfaktoren als Startwerte eingesetzt werden, um adäquate Dämpfungsfaktoren zu finden.

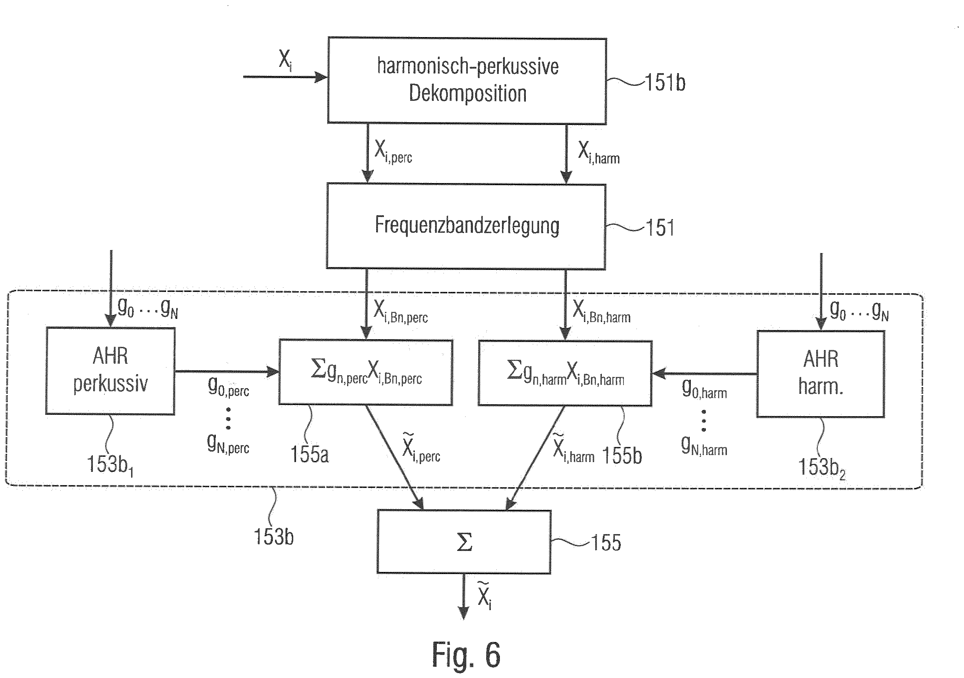

Stehen die Dämpfungsfaktoren für den aktuellen Membranauslenkungssignalblock $X_i$ fest, werden sie z. B. über Attack-, Hold- und Release-Funktionen (AHR) 153b geregelt, die wiederum in den einzelnen Frequenzbändern unabhängig voneinander sein können. An dieser Stelle können zudem unterschiedliche AHR-Funktionen (z. B. eine perkussive AHR $153b_1$ und eine harmonische AHR $153b_2$) auf den perkussiven Signalanteil und den harmonischen Signalanteil angewandt werden, was die Klangqualität weiter verbessern kann (kürzere Zeitkonstanten eignen sich z. B. für perkussive Signale, längere z. B. für harmonische Signale). Hierfür sollte das Signal $X_i$ zuvor durch eine harmonisch-perkussive Dekomposition 151b in die entsprechenden Anteile aufgeteilt und danach durch die Filterbank verarbeitet werden (Frequenzbandzerlegung 151). Fig. 6 stellt diesen Vorgang schematisch dar.

Fig. 6 zeigt ein Ausführungsbeispiel für unterschiedliche Attack-, Hold- und Release-Funktionen $153b_1$, $153b_2$ für perkussive und harmonische Signalanteile, die ein Detail der Attack-, Hold- und Release-Funktionen 153b aus Fig. 3 sein können. Gemäß einem Ausführungsbeispiel kann die Dämpfungsfaktorenermittlung 153 aus Fig. 1 oder Fig. 2 dieselben Merkmale und Funktionalitäten, wie die unterschiedlichen Attack-, Hold- und Release-Funktionen $153b_1$, $153b_2$ aufweisen.

Die Dämpfungsfaktoren $g_0$ bis $g_N$ können sowohl die perkussive AHR $153b_1$ als auch die harmonische AHR $153b_2$ von der Dämpfungsfaktorenermittlung 153a (dargestellt in Fig. 3) erhalten und anpassen.

Gemäß einem Ausführungsbeispiel kann die Signalanalyse 150 (Headroom-Berechnung 180a, 180b, Suche kritischer Auslenkungswerte 152) und/oder die Berechnung der Dämpfungsfaktoren 153, 153a, 153b ggf. anders geschehen, wobei das Endergebnis sehr ähnlich oder identisch sein kann.

Gemäß einem Ausführungsbeispiel kann die Vorrichtung 100, das Verfahren 300 oder das Verfahren 400 in der Audiosignalverarbeitung, dem Schutz von Lautsprechern, Microspeakern in Mobilgeräten (Smartphones, Tablets, Notebooks, ...), großen PA-Lautsprechern nahe mech. Leistungsgrenze und kleiner Wandler in Bluetooth-Lautsprechern genutzt werden.

Gemäß einem Ausführungsbeispiel können die Attack-, Hold- und Release-Funktionen (AHR) 153b die perkussive AHR 153b, als auch die harmonische AHR $153b_2$, wie auch eine Synthese eines perkussiven 155a und harmonischen 155b modifizierten Membranauslenkungssignals des aktuellen Zeitblocks aufweisen, aber es ist auch möglich, dass die Attack-, Hold- und Release-Funktionen (AHR) 153b nur die perkussive AHR $153b_1$ und die harmonische AHR $153b_2$ aufweisen und die Verrechnungseinrichtung 155 aus Fig. 1, Fig. 2 oder Fig. 3 die Synthese eines perkussiven 155a und harmonischen 155b modifizierten Membranauslenkungssignals des aktuellen Zeitblocks, als auch die Aufsummierung 155 des perkussiven 155a und harmonischen 155b modifizierten Membranauslenkungssignals des aktuellen Zeitblocks aus Fig. 6 aufweist. In anderen Worten können in 155a und 155b die Frequenzbänder bereits separat für einen perkussiven 155a und harmonischen 155b Membranauslenkungssignalanteil aufsummiert werden. Die Aufsummierung 155 in Fig. 6 summiert dann die beiden Membranauslenkungssignalanteil auf.

**Signalsynthese**

Das perkussive 155a und das harmonische 155b modifizierte Membranauslenkungssignal des aktuellen Zeitblocks wird danach z. B. aufsummiert 155 und aus der begrenzten Auslenkung $\tilde{X}_i$ (z. B. dem modifizierten aktuellen Membranauslenkungssignal) wird z. B. mit Hilfe eines inversen nichtlinearen Auslenkungsmodells 175 die Spannung berechnet, die dem Lautsprecher 200 zugeführt werden muss, um die gewünschte Auslenkung hervorzurufen. Dieses inverse Modell kann auch als einfaches Filter, physikalisches Strukturmodell oder Machine-Learning-Modell ausgeführt sein. Alle hierin aufgeführten Aufzählungen für inverse Modelle sind hierbei als beispielhaft und nicht als abschließend anzusehen. Die Aufsummierung 155, sowie die perkussiven 155a und harmonischen 155b modifizierten Membranauslenkungssignale des aktuellen Zeitblocks aus Fig. 6 können Merkmale und Funktionalitäten der Verrechnungseinrichtung 155 aus Fig. 1, Fig. 2 und Fig. 3 aufweisen, und/oder die Verrechnungseinrichtung 155 aus Fig. 1, Fig. 2 und Fig. 3 kann Merkmale und Funktionalitäten der Aufsummierung 155, sowie der perkussiven 155a und harmonischen 155b modifizierten Membranauslenkungssignals des aktuellen Zeitblocks aus Fig. 6 aufweisen.

Wirkungen und Vorteile der technischen Merkmale der Vorrichtung:
Die Signalanalyse 150 kann konfiguriert sein, um Dämpfungskoeffizienten z. B. so zu wählen, dass die Auslenkung ohne unnötigen Headroom optimal ausgereizt wird und Dämpfungskoeffizienten z. B. nicht mit zufälligen Startwerten optimiert werden. Dies ist vorteilhaft, da die Auslenkung maximiert werden kann und die Berechnung der Dämpfungsfaktoren schneller erfolgen kann als bei einer reinen Optimierung.

Das Nichtlineare Vorwärts- und Rückwärtsmodell kann konfiguriert sein, um mit entsprechenden Parametern eine exakte Prädiktion des Wandlerverhaltens (z. B. des Membranauslenkungssignals) zu ermöglichen. Dies ist vorteilhaft, da die Leistungsfähigkeit des Wandlers (z. B. des Lautsprechers 200) sich besser ausnutzen lässt und kein Feedback-Pfad notwendig ist.

Der Multiband-Ansatz (z. B. die Frequenzbandzerlegung 151) in Kombination mit blockweise konstanten Dämpfungsfaktoren kann konfiguriert sein, um keine neuen Nichtlinearitäten innerhalb der Signalblöcke (z. B. den Membranauslenkungssignalblöcken wie z. B. $X_i$, $X_{i+1}$) zu erzeugen. Dies ist vorteilhaft, da weniger klangliche Artefakte durch Nichtlinearitäten als bei einem Kompressor-Ansatz auftreten können.

Das Psychoakustische Modell 190, z.B. eine A-Bewertung, Kurven gleicher Lautheit, Maskierung im Zeit- und Frequenzbereich kann konfiguriert sein, um Dämpfungsfaktoren mit Bezug auf ein menschliches Hören optimal zu wählen. Dies ist vorteilhaft, da bei höchstmöglicher Auslenkung Klangqualität und Lautheit maximiert werden können.

Somit kann die hierin beschriebene Erfindung vorteilhaft sein, da gemäß einem Ausführungsbeispiel der vorliegenden Erfindung eine Ausgangsspannung durch ein inverses nichtlineares Lautsprecher-Modell (X->U) berechnet werden kann, das genauer das Membranauslenkungssignal prädizieren kann, als ein Model gemäß US20180014121A1. Zudem wird beispielsweise ein psychoakustisches Modell zur Berechnung von Dämpfungsfaktoren verwendet (in einfachster Ausführung z. B. die A-Bewertung), um die Klangqualität zu erhöhen.

In A MODEL BASED EXCURSION PROTECTION ALGORITHM FOR LOUDSPEAKERS gibt es keinen Multiband-Ansatz, sondern alle Frequenzen werden mit einem Kompressor gedämpft, was wiederum durch die nichtlineare Kennlinie des Kompressors zu Nichtlinearitäten (THD, IMD) im Signal führt. Gemäß einem Ausführungsbeispiel der vorliegenden Erfindung gibt es einen Multiband-Ansatz und ein psychoakustisches Modell zur Berechnung der Dämpfungsfaktoren (in einfachster Ausführung z. B. die A-Bewertung), wodurch ein mechanischer Schutz z. B. einer Membran eines Lautsprechers erhöht werden kann und ebenso die Klangqualität erhöht werden kann.

Gemäß einem Ausführungsbeispiel der vorliegenden Erfindung werden Nichtlineare Auslenkungsmodelle (vorwärts und invers) genutzt, hingegen in US8855322B2 werden die Dämpfungsfaktoren z. B. direkt auf das Spannungssignal angewendet; die Prädiktion des tatsächlichen Wandlerverhaltens ist dadurch bei der vorliegenden Erfindung genauer als in US8855322B2. Die Optimierung zur Berechnung der Subband-Dämpfungsfaktoren nutzt gemäß US8855322B2 eine Randbedingung (nämlich Multiplikation der Beträge von Bandenergie und Übertragungsfunktion unter Missachtung der Phasenlage und möglicher Auslöschung), die dazu führt, dass die Gesamtauslenkung nach dem Algorithmus häufig unter dem Grenzwert bleibt und die Leistungsfähigkeit des Wandlers nicht voll genutzt wird. Gemäß einem Ausführungsbeispiel der vorliegenden Erfindung sorgt beispielsweise die Signalanalyse dafür, dass die Phasenlage Beachtung findet und kein unnötiger Headroom bleibt.

Gemäß einem Ausführungsbeispiel der vorliegenden Erfindung werden nichtlineare Modelle genutzt, bzw. eine genaue Signalanalyse in den Frequenzbändern durchgeführt, im Gegensatz zu US9807502BA.

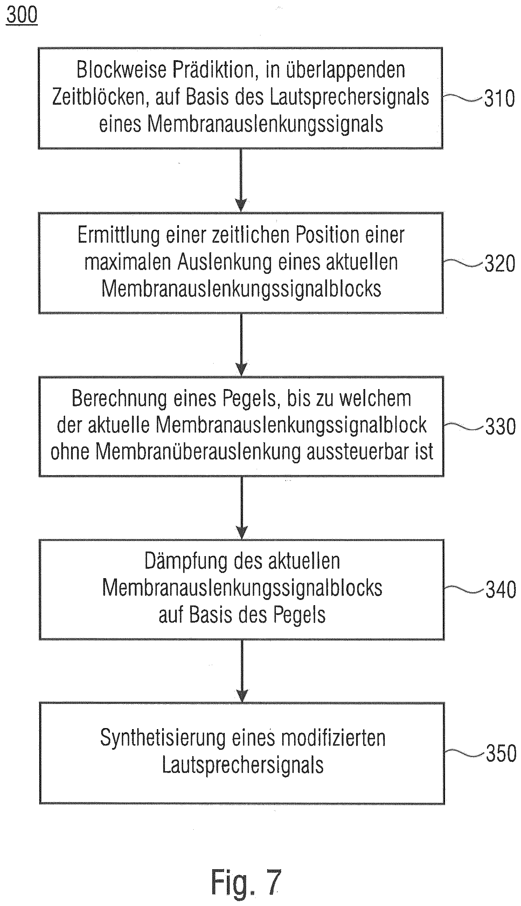

Fig. 7 zeigt ein Blockdiagramm eines Verfahrens 300 zur Modifizierung eines Lautsprechersignals zur Vermeidung einer Membranüberauslenkung, mit einer blockweisen Prädiktion 310, in überlappenden Zeitblöcken, auf Basis des Lautsprechersignals eines Membranauslenkungssignals, um pro Zeitblock einen Membranauslenkungssignalblock zu erhalten. Ferner kann das Verfahren 300 eine Ermittlung 320 einer zeitlichen Position einer maximalen Auslenkung eines aktuellen Membranauslenkungssignalblocks eines aktuellen Zeitblocks innerhalb eines Überlappbereichs mit einem nachfolgenden Zeitblock aufweisen. Des Weiteren kann das Verfahren 300 eine Berechnung 330 eines Pegels, bis zu welchem der aktuelle Membranauslenkungssignalblock ohne Membranüberauslenkung aussteuerbar ist, für den aktuellen Zeitblock unter Berücksichtigung eines Vergleichs des aktuellen Membranauslenkungssignalblocks mit einem nachfolgenden Membranauslenkungssignalblock oder einer Schätzung des nachfolgenden Membranauslenkungssignalblocks aus dem aktuellen Membranauslenkungssignalblock an der zeitlichen Position aufweisen. Ferner kann das Verfahren 300 eine Dämpfung 340 des aktuellen Membranauslenkungssignalblocks auf Basis des Pegels, um einen modifizierten aktuellen Membranauslenkungssignalblock zu erhalten und eine Synthetisierung 350 eines modifizierten Lautsprechersignals auf Basis des modifizierten aktuellen Membranauslenkungssignalblocks aufweisen.

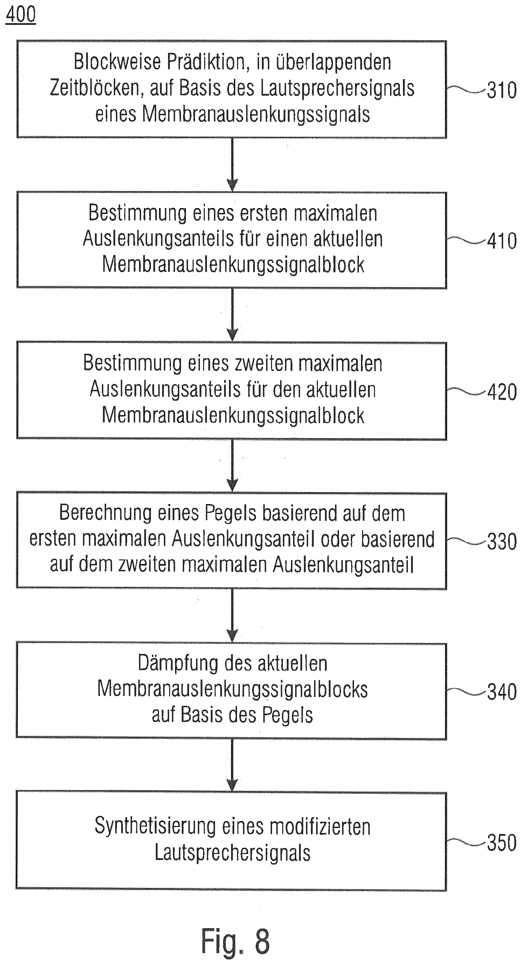

Fig. 8 zeigt ein Blockdiagramm eines Verfahrens 400 zur Modifizierung eines Lautsprechersignals zur Vermeidung einer Membranüberauslenkung, mit einer blockweisen Prädiktion 310, in überlappenden Zeitblöcken, auf Basis des Lautsprechersignals eines Membranauslenkungssignals, um pro Zeitblock einen Membranauslenkungssignalblock zu erhalten. Ferner kann das Verfahren 400 eine Bestimmung 410 eines ersten maximalen Auslenkungsanteils für einen aktuellen Membranauslenkungssignalblock eines aktuellen Zeitblocks in einem ersten Überlappbereich des aktuellen Zeitblocks mit einem vorangegangenen Zeitblock sowie in dem restlichen Bereich von dem aktuellen Membranauslenkungssignalblock aufweisen. Des Weiteren kann das Verfahren 400 eine Bestimmung 420 eines zweiten maximalen Auslenkungsanteils für den aktuellen Membranauslenkungssignalblock des aktuellen Zeitblocks in einem zweiten Überlappbereich des aktuellen Zeitblocks mit einem nachfolgenden Zeitblock aufweisen. Ferner kann das Verfahren 400 eine Berechnung 330 eines Pegels basierend auf dem ersten maximalen Auslenkungsanteil, wenn der erste maximale Auslenkungsanteil kleiner ist als der zweite maximale Auslenkungsanteil oder Berechnung des Pegels basierend auf dem zweiten maximalen Auslenkungsanteil, wenn der zweite maximale Auslenkungsanteil kleiner ist als der erste maximale Auslenkungsanteil aufweisen. Des Weiteren kann das Verfahren 400 eine Dämpfung 340 des aktuellen Membranauslenkungssignalblocks auf Basis des Pegels, um einen modifizierten aktuellen Membranauslenkungssignalblock zu erhalten und eine Synthetisierung 350 eines modifizierten Lautsprechersignals auf Basis des modifizierten aktuellen Membranauslenkungssignalblocks aufweisen.

**Patentansprüche**

1.  Vorrichtung (100) zur Modifizierung eines Lautsprechersignals (U, $U_I$, $U_{i+1}$, 110) zur Vermeidung einer Membranüberauslenkung, die konfiguriert ist, um

    blockweise, in überlappenden Zeitblöcken ($120_1$, $120_2$, $120_3$, i-1, i, i+1), auf Basis des Lautsprechersignals (U, $U_I$, $U_{I+1}$, 110) ein Membranauslenkungssignal (X, 130) zu prädizieren, um pro Zeitblock ($120_1$, $120_2$, $120_3$, i-1, i, i+1) einen Membranauslenkungssignalblock ($130_1$, $130_2$, $130_3$, $X_{I-1}$, $X_I$, $X_{i+1}$) zu erhalten;
    eine zeitliche Position (140, $k_0$) einer maximalen Auslenkung ($X_i[k_0]$) eines aktuellen Membranauslenkungssignalblocks ($130_2$, $X_I$) eines aktuellen Zeitblocks ($120_2$, i) innerhalb eines Überlappbereichs (124) mit einem nachfolgenden Zeitblock ($120_3$, i+1) zu ermitteln;
    für den aktuellen Zeitblock ($120_2$, i) unter Berücksichtigung eines Vergleichs des aktuellen Membranauslenkungssignalblocks ($X_i[k_0]$, $130_2$) mit einem nachfolgenden Membranauslenkungssignalblock ($130_3$) oder einer Schätzung des nachfolgenden Membranauslenkungssignalblocks ($130_3$) aus dem aktuellen Membranauslenkungssignalblock ($130_2$, $X_I$) an der zeitlichen Position (140) einen Pegel (150a) zu berechnen, bis zu welchem der aktuelle Membranauslenkungssignalblock ($130_2$, $X_I$) ohne Membranüberauslenkung aussteuerbar ist;
    den aktuellen Membranauslenkungssignalblock ($130_2$, $X_i$) auf Basis des Pegels (150a) zu dämpfen, um einen modifizierten aktuellen Membranauslenkungssignalblock ($\tilde{X}_i$, $160_2$) zu erhalten; und
    ein modifiziertes Lautsprechersignal ($\tilde{U}$, 170) auf Basis des modifizierten aktuellen Membranauslenkungssignalblocks ($\tilde{X}_i$, $160_2$) zu synthetisieren.

2.  Vorrichtung (100) gemäß Anspruch 1, wobei die Vorrichtung (100) konfiguriert ist, um zur Berechnung des Pegels (150a) einen Quotienten zwischen dem aktuellen Membranauslenkungssignalblock ($X_i[k_0]$, $130_2$) an der zeitlichen Position ($k_o$, 140) einerseits und einer Summe des nachfolgenden Membranauslenkungssignalblocks ($130_3$) oder der Schätzung des nachfolgenden Membranauslenkungssignalblocks ($130_3$) an der zeitlichen Position (140) und dem aktuellen Membranauslenkungssignalblock ($X_i[k_0]$, $130_2$) an der zeitlichen Position (140, $k_0$) andererseits zu bestimmen.

3.  Vorrichtung (100) zur Modifizierung eines Lautsprechersignals (U, $U_i$, $U_{i+1}$, 110) zur Vermeidung einer Membranüberauslenkung, die konfiguriert ist, um

    blockweise, in überlappenden Zeitblöcken ($120_1$, $120_2$, $120_3$, i-1, i, i+1), auf Basis des Lautsprechersignals (U, $U_i$, $U_{i+1}$, 110) ein Membranauslenkungssignal (X, 130) zu prädizieren, um pro Zeitblock ($120_1$, $120_2$, $120_3$, i-1, i, i+1) einen Membranauslenkungssignalblock ($130_1$, $130_2$, $130_3$, $X_{I-1}$, $X_i$, $X_{I+1}$) zu erhalten;
    einen ersten maximalen Auslenkungsanteil ($h_{b,I}$, 180a) für einen aktuellen Membranauslenkungssignalblock ($130_2$, $X_i$) eines aktuellen Zeitblocks ($120_2$, i) in einem ersten Überlappbereich (122) des aktuellen Zeitblocks ($120_2$, i) mit einem vorangegangenen Zeitblock (i-1, $120_1$) sowie in dem restlichen Bereich (124) von dem aktuellen Membranauslenkungssignalblock ($130_2$, $X_i$) zu bestimmen;
    einen zweiten maximalen Auslenkungsanteil (180b, $h_a$) für den aktuellen Membranauslenkungssignalblock ($130_2$, $X_i$) des aktuellen Zeitblocks ($120_2$, i) in einem zweiten Überlappbereich (124) des aktuellen Zeitblocks ($120_2$, i) mit einem nachfolgenden Zeitblock ($120_3$, i+1) zu bestimmen;
    einen Pegel (150a) basierend auf dem ersten maximalen Auslenkungsanteil ($h_{b,I}$, 180a) zu berechnen, wenn der erste maximale Auslenkungsanteil ($h_{b,I}$, 180a) kleiner ist als der zweite maximale Auslenkungsanteil (180b, $h_a$) oder den Pegel (150a) basierend auf dem zweiten maximalen Auslenkungsanteil (180b, $h_a$) zu berechnen, wenn der zweite maximalen Auslenkungsanteil (180b, $h_a$) kleiner ist als der erste maximale Auslenkungsanteil ($h_{b,I}$, 180a);
    den aktuellen Membranauslenkungssignalblock ($130_2$, $X_I$) auf Basis des Pegels (150a) zu dämpfen, um einen modifizierten aktuellen Membranauslenkungssignalblock ($\tilde{X}_i$, $160_2$) zu erhalten; und
    ein modifiziertes Lautsprechersignal ($\tilde{U}$, 170) auf Basis des modifizierten aktuellen Membranauslenkungssignalblocks ($\tilde{X}_i$, $160_2$) zu synthetisieren.

4. Vorrichtung (100) gemäß Anspruch 3, wobei die Vorrichtung (100) konfiguriert ist, um den Pegel (150a), basierend auf dem ersten maximalen Auslenkungsanteil ($h_{b,l}$, 180a), mittels eines Produkts aus einem maximalen Auslenkungsgrenzwert ($X_{max}$) und dem ersten maximalen Auslenkungsanteil ($h_{b,l}$, 180a) zu berechnen oder den Pegel (150a), basierend auf dem zweiten maximalen Auslenkungsanteil (180b, $h_a$), mittels eines Produkts aus dem maximalen Auslenkungsgrenzwert ($X_{max}$) und dem zweiten maximalen Auslenkungsanteil (180b, $h_a$) zu berechnen.

5. Vorrichtung (100) gemäß Anspruch 3 oder Anspruch 4, wobei die Vorrichtung (100) konfiguriert ist,

   um den zweiten maximalen Auslenkungsanteil (180b, $h_a$) auf Basis des aktuellen Membranauslenkungssignalblock ($130_2$, $X_l$) zu schätzen; oder
   um den zweiten maximalen Auslenkungsanteil (180b, $h_a$) auf Basis des aktuellen Membranauslenkungssignalblock ($130_2$, $X_i$) mittels eines neuronalen Netzwerks zu schätzen; oder
   um eine zeitliche Position (140, $k_0$) einer maximalen Auslenkung ($X_i[k_0]$) des aktuellen Membranauslenkungssignalblocks ($130_2$, $X_i$) des aktuellen Zeitblocks ($120_2$, i) innerhalb des zweiten Überlappbereichs (124) mit dem nachfolgenden Zeitblock ($120_3$, i+1) zu ermitteln; und
   für den zweiten maximalen Auslenkungsanteil (180b, $h_a$) einen Quotienten zwischen dem aktuellen Membranauslenkungssignalblock ($X_i[k_0]$, $130_2$) an der zeitlichen Position ($k_0$, 140) einerseits und einer Summe eines nachfolgenden Membranauslenkungssignalblocks ($130_3$) oder einer Schätzung des nachfolgenden Membranauslenkungssignalblocks ($130_3$) an der zeitlichen Position (140), basierend auf dem aktuellen Membranauslenkungssignalblock ($130_2$, $X_l$) des aktuellen Zeitblocks ($120_2$, i), und dem aktuellen Membranauslenkungssignalblock ($X_i[k_0]$, $130_2$) an der zeitlichen Position (140, $k_0$) andererseits zu bestimmen.

6. Vorrichtung (100) gemäß einem der Ansprüche 1 bis 5, wobei die Vorrichtung (100) konfiguriert ist, um den aktuellen Membranauslenkungssignalblock ($130_2$, $X_l$) in zumindest einen Frequenzbandsignalzeitblock zu zerlegen; und um für jeden des zumindest einen Frequenzbandsignalzeitblocks zumindest eine weitere zeitliche Position ($k_{c,l}$) zu ermitteln, an der eine vorbestimmte Signalkombination einen maximalen Auslenkungsgrenzwert ($X_{max}$) überschreitet, und zwar in dem ersten Überlappbereich (122) des aktuellen Zeitblocks ($120_2$, i) mit dem vorangegangenen Zeitblock (i-1, $120_1$) sowie in dem restlichen aktuellen Zeitblock (124).

7. Vorrichtung (100) gemäß Anspruch 6, wobei die Signalkombination zumindest eine der folgenden additiven Kombinationen aufweist:

   eine additive Kombination des aktuellen Membranauslenkungssignalblocks ($X_i$) mit einem modifizierten vorangegangenen Membranauslenkungssignalblock ($\tilde{X}_{i-1}$, $X_{alt}$, $160_1$); und
   eine additive Kombination des jeweiligen Frequenzbandsignalzeitblocks mit dem modifizierten vorangegangenen Membranauslenkungssignalblock ($\tilde{X}_{i-1}$, $X_{alt}$, $160_1$); und
   eine additive Kombination eines Betrags des aktuellen Membranauslenkungssignalblocks ($X_l$) mit einem Betrag des modifizierten vorangegangenen Membranauslenkungssignalblocks ($\tilde{X}_{i-1}$, $X_{alt}$).

8. Vorrichtung (100) gemäß einem der Ansprüche 6 und 7, wobei die Vorrichtung (100) konfiguriert ist, um einen Dämpfungsfaktor für jeden des zumindest einen Frequenzbandsignalzeitblocks, basierend auf dem Pegel (150a) und der weiteren zeitlichen Position (142, $k_{c,l}$) zu bestimmen, um den aktuellen Membranauslenkungssignalblock ($130_2$, $X_i$) zu dämpfen.

9. Vorrichtung (100) gemäß Anspruch 8, wobei die Vorrichtung (100) konfiguriert ist, um den Dämpfungsfaktor pro Frequenzbandsignalzeitblock für den aktuellen Zeitblock mit einer Version des Dämpfungsfaktors pro Frequenzbandsignalzeitblock für den vorangegangenen Zeitblock, verringert in Dämpfungsstärke durch eine vorbestimmte Abklingfunktion, zu vergleichen und für den aktuellen Zeitblock unter denselben einen gewählten Dämpfungsfaktor zu verwenden, der mit einer höheren Dämpfung verbunden ist; und wobei die Vorrichtung (100) konfiguriert ist, um den aktuellen Membranauslenkungssignalblock ($130_2$, $X_l$) in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen.

10. Vorrichtung (100) gemäß einem der Ansprüche 6 bis 9, wobei die Vorrichtung (100) konfiguriert ist, um für jede der zumindest einen weiteren zeitlichen Position (142, $k_{c,l}$) einen ersten maximalen Auslenkungsanteil ($h_{b,l}$, 180a) für den aktuellen Zeitblock ($120_2$, i) unter Berücksichtigung des maximalen Auslenkungsgrenzwerts ($X_{max}$) und des modifizierten vorangegangenen Membranauslenkungssignalblocks ($\tilde{X}_{i-1}$, $X_{alt}$, $160_1$) zu berechnen.

**11.** Vorrichtung (100) gemäß einem der Ansprüche 1 bis 10, wobei die Vorrichtung (100) konfiguriert ist, um aus dem modifizierten aktuellen Membranauslenkungssignalblock ($\tilde{X}_i$, $160_2$) einen modifizierten aktuellen Lautsprechersignalblock ($170_2$, $\tilde{U}_i$) zu berechnen und einen ersten Teil des modifizierten aktuellen Lautsprechersignalblocks ($170_2$, $\tilde{U}_i$) einem Overlap-Add mit einem modifizierten vorangegangenen Lautsprechersignalblock ($170_1$, $\tilde{U}_{i-1}$) zu unterziehen, um ein modifiziertes Lautsprechersignal ($\tilde{U}$, 170) zu synthetisieren; und wobei die Vorrichtung (100) ausgebildet ist, um anstelle des modifizierten aktuellen Lautsprechersignalblocks ($170_2$, $\tilde{U}_i$), ein aktuelles Lautsprechersignal (110, $U_i$) bereitzustellen, wenn eine maximale Auslenkung des aktuellen Membranauslenkungssignalblocks ($130_2$, $X_i$) des aktuellen Zeitblocks ($120_2$, i) einen maximalen Auslenkungsgrenzwert ($X_{max}$) nicht überschreitet.

**12.** Vorrichtung (100) gemäß einem der Ansprüche 1 bis 11, wobei die Vorrichtung (100) um den aktuellen Membranauslenkungssignalblock ($130_2$, $X_i$) zu dämpfen ausgebildet ist, um einen oder mehrere Dämpfungsfaktoren basierend auf dem Pegel zu berechnen und um die ein oder mehreren Dämpfungsfaktoren mit dem aktuellen Membranauslenkungssignalblock ($130_2$, $X_I$) zu verrechnen; und
wobei die Vorrichtung (100) konfiguriert ist, um den einen oder die mehreren Dämpfungsfaktoren für den aktuellen Zeitblock (i, $120_2$) mit einer Version der ein oder mehreren Dämpfungsfaktoren für den vorangegangenen Zeitblock (i-1, $120_1$), verringert in Dämpfungsstärke durch eine vorbestimmte Abklingfunktion, zu vergleichen und für den aktuellen Zeitblock (i, $120_2$) unter denselben einen gewählten Dämpfungsfaktor zu verwenden, der mit einer höheren Dämpfung verbunden ist.

**13.** Vorrichtung (100) gemäß Anspruch 12, wobei die Vorrichtung (100) konfiguriert ist, um den aktuellen Membranauslenkungssignalblock ($130_2$, $X_I$) in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen; und
wobei die vorbestimmte Abklingfunktion für den perkussiven Signalanteil kürzere Zeitkonstanten aufweist, als für den harmonischen Signalanteil.

**14.** Verfahren zur Modifizierung eines Lautsprechersignals (U, $U_I$, $U_{I+1}$, 110) zur Vermeidung einer Membranüberauslenkung, mit folgenden Schritten:

blockweise Prädiktion, in überlappenden Zeitblöcken ($120_1$, $120_2$, $120_3$, i-1, i, i+1), auf Basis des Lautsprechersignals (U, $U_I$, $U_{I+1}$, 110) eines Membranauslenkungssignals (X, 130), um pro Zeitblock ($120_1$, $120_2$, $120_3$, i-1, i, i+1) einen Membranauslenkungssignalblock ($130_1$, $130_2$, $130_3$, $X_{I-1}$, $X_I$, $X_{i+1}$) zu erhalten;
Ermittlung einer zeitlichen Position (140, $k_0$) einer maximalen Auslenkung ($X_i[k_0]$) eines aktuellen Membranauslenkungssignalblocks ($130_2$, $X_I$) eines aktuellen Zeitblocks ($120_2$, i) innerhalb eines Überlappbereichs (124) mit einem nachfolgenden Zeitblock ($120_3$, i+1);
Berechnung eines Pegels (150a), bis zu welchem der aktuelle Membranauslenkungssignalblock ($130_2$, $X_I$) ohne Membranüberauslenkung aussteuerbar ist, für den aktuellen Zeitblock ($120_2$, i) unter Berücksichtigung eines Vergleichs des aktuellen Membranauslenkungssignalblocks ($X_i[k_0]$, $130_2$) mit einem nachfolgenden Membranauslenkungssignalblock ($130_3$) oder einer Schätzung des nachfolgenden Membranauslenkungssignalblocks ($130_3$) aus dem aktuellen Membranauslenkungssignalblock ($130_2$, $X_I$) an der zeitlichen Position (140) Dämpfung des aktuellen Membranauslenkungssignalblocks ($130_2$, $X_I$) auf Basis des Pegels (150a), um einen modifizierten aktuellen Membranauslenkungssignalblock ($\tilde{X}_i$, $160_2$) zu erhalten; und
Synthetisierung eines modifizierten Lautsprechersignals (170, $\tilde{U}$) auf Basis des modifizierten aktuellen Membranauslenkungssignalblocks ($\tilde{X}_i$, $160_2$).

**15.** Verfahren zur Modifizierung eines Lautsprechersignals (U, $U_i$, $U_{i+1}$, 110) zur Vermeidung einer Membranüberauslenkung, mit folgenden Schritten:

blockweise Prädiktion, in überlappenden Zeitblöcken ($120_1$, $120_2$, $120_3$, i-1, i, i+1), auf Basis des Lautsprechersignals (U, $U_i$, $U_{I+1}$, 110) ein Membranauslenkungssignal (X, 130), um pro Zeitblock ($120_1$, $120_2$, $120_3$, i-1, i, i+1) einen Membranauslenkungssignalblock ($130_1$, $130_2$, $130_3$, $X_{i-1}$, $X_I$, $X_{i+1}$) zu erhalten;
Bestimmung eines ersten maximalen Auslenkungsanteils ($h_{b,I}$, 180a) für einen aktuellen Membranauslenkungssignalblock ($130_2$, $X_I$) eines aktuellen Zeitblocks ($120_2$, i) in einem ersten Überlappbereich (122) des aktuellen Zeitblocks ($120_2$, i) mit einem vorangegangenen Zeitblock (i-1, $120_1$) sowie in dem restlichen Bereich von dem aktuellen Membranauslenkungssignalblock ($130_2$, $X_I$);
Bestimmung eines zweiten maximalen Auslenkungsanteils (180b, $h_a$) für den aktuellen Membranauslenkungssignalblock ($130_2$, $X_I$) des aktuellen Zeitblocks ($120_2$, i) in einem zweiten Überlappbereich (124) des aktuellen Zeitblocks ($120_2$, i) mit einem nachfolgenden Zeitblock ($120_3$, i+1);

Berechnung eines Pegels (150a) basierend auf dem ersten maximalen Auslenkungsanteil ($h_{b,l}$, 180a), wenn der erste maximale Auslenkungsanteil ($h_{b,l}$, 180a) kleiner ist als der zweite maximale Auslenkungsanteil (180b, $h_a$) oder Berechnung des Pegels (150a) basierend auf dem zweiten maximalen Auslenkungsanteil (180b, $h_a$), wenn der zweite maximalen Auslenkungsanteil (180b, $h_a$) kleiner ist als der erste maximale Auslenkungsanteil ($h_{b,l}$, 180a);

Dämpfung des aktuellen Membranauslenkungssignalblocks ($130_2$, $X_i$) auf Basis des Pegels (150a), um einen modifizierten aktuellen Membranauslenkungssignalblock ($\tilde{X}_i$, $160_2$) zu erhalten; und

Synthetisierung eines modifizierten Lautsprechersignals ($\tilde{U}$, 170) auf Basis des modifizierten aktuellen Membranauslenkungssignalblocks ($\tilde{X}_i$, $160_2$).

**Claims**

1. Apparatus (100) for modifying a loudspeaker signal (U, $U_i$, $U_{i+1}$, 110) for preventing diaphragm over-deflection configured to

   predict a diaphragm deflection signal (X, 130), block-by-block, in overlapping time blocks ($120_1$, $120_2$, $120_3$, i-1, i, i+1) based on the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);

   determine a temporal position (140, $k_0$) of a maximum deflection ($X_i[k_0]$) of a current diaphragm deflection signal block ($130_2$, $X_i$) of a current time block ($120_2$, i) within an overlap area (124) with a subsequent time block ($120_3$, i+1);

   calculate a level (150a) up to which the current diaphragm deflection signal block ($130_2$, $X_l$) can be controlled without diaphragm over-deflection for the current time block ($120_2$, i), by considering a comparison of the current diaphragm deflection signal block ($X_i[k_0]$, $130_2$) with a subsequent diaphragm deflection signal block ($130_3$) or an estimation of the subsequent diaphragm deflection signal block ($130_3$) from the current diaphragm deflection signal block ($130_2$, $X_i$) at the temporal position (140);

   attenuate the current diaphragm deflection signal block ($130_2$, $X_i$) based on the level (150a) to obtain a modified current diaphragm deflection signal block ($\tilde{X}_i$, $160_2$); and

   synthesize a modified loudspeaker signal ($\tilde{U}$, 170) based on the modified current diaphragm deflection signal block ($\tilde{X}_i$, $160_2$).

2. Apparatus (100) according to claim 1, wherein, for calculating the level (150a), the apparatus (100) is configured to determine a quotient between the current diaphragm deflection signal block ($X_i[k_0]$, $130_2$) at the temporal position ($k_0$, 140) on the one hand and a sum of the subsequent diaphragm deflection signal block ($130_3$) or the estimation of the subsequent diaphragm deflection signal block ($130_3$) at the temporal position (140) and the current diaphragm deflection signal block ($X_i[k_0]$, $130_2$) at the temporal position (140, $k_0$) on the other hand.

3. Apparatus (100) for modifying a loudspeaker signal (U, $U_i$, $U_{i+1}$, 110) for preventing diaphragm over-deflection configured to

   predict a diaphragm deflection signal (X, 130), block-by-block, in overlapping time blocks ($120_1$, $120_2$, $120_3$, i-1, i, i+1) based on the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);

   determine a first maximum deflection portion ($h_{b,l}$, 180a) for a current diaphragm deflection signal block ($130_2$, $X_i$) of a current time block ($120_2$, i) in a first overlap area (122) of the current time block ($120_2$, i) with a preceding time block (i-1, $120_1$) as well as in the residual area (124) of the current diaphragm deflection signal block ($130_2$, $X_i$);

   determine a second maximum deflection portion (180b, $h_a$) for the current diaphragm deflection signal block ($130_2$, $X_i$) of the current time block ($120_2$, i) in a second overlap area (124) of the current time block ($120_2$, i) with a subsequent time block ($120_3$, i+1);

   calculate a level (150a) based on the first maximum deflection portion ($h_{b,l}$, 180a) when the first maximum deflection portion ($h_{b,l}$, 180a) is smaller than the second maximum deflection portion (180b, $h_a$) or calculate the level (150a) based on the second maximum deflection portion (180b, $h_a$) when the second maximum deflection portion (180b, $h_a$) is smaller than the first maximum deflection portion ($h_{b,l}$, 180a);

   attenuate the current diaphragm deflection signal block ($130_2$, $X_i$) based on the level (150a) to obtain a modified current diaphragm deflection signal block ($\tilde{X}_i$, $160_2$) ; and

   synthesize a modified loudspeaker signal ($\tilde{U}$, 170) based on the modified current diaphragm deflection signal

block ($\tilde{X}_i$, $160_2$).

4. Apparatus (100) according to claim 3, wherein the apparatus (100) is configured to calculate the level (150a) based on the first maximum deflection portion ($h_{b,l}$, 180a) by means of a product of a maximum deflection limiting value ($X_{max}$) and the first maximum deflection portion ($h_{b,l}$, 180a) or to calculate the level (150a) based on the second maximum deflection portion (180b, $h_a$) by means of a product of the maximum deflection limiting value ($X_{max}$) and the second maximum deflection portion (180b, $h_a$).

5. Apparatus (100) according to claim 3 or claim 4, wherein the apparatus (100) is configured to

estimate the second maximum deflection portion (180b, $h_a$) based on the current diaphragm deflection signal block ($130_2$, $X_i$); or
estimate the second maximum deflection portion (180b, $h_a$) based on the current diaphragm deflection signal block ($130_2$, $X_i$) by means of a neural network; or
determine a temporal position (140, $k_0$) of a maximum deflection ($X_i[k_0]$) of the current diaphragm deflection signal block ($130_2$, $X_i$) of the current time block ($120_2$, i) within the second overlap area (124) with the subsequent time block ($120_3$, i+1); and
determine, for the second maximum deflection portion (180b, $h_a$), a quotient between the current diaphragm deflection signal block ($X_i[k_0]$, $130_2$) at the temporal position ($k_0$, 140) on the one hand and a sum of a subsequent diaphragm deflection signal block ($130_3$) or an estimation of the subsequent diaphragm deflection signal block ($130_3$) at the temporal position (140), based on the current diaphragm deflection signal block ($130_2$, $X_i$) of the current time block ($120_2$, i), and the current diaphragm deflection signal block ($X_i[k_0]$, $130_2$) at the temporal position (140, $k_0$) on the other hand.

6. Apparatus (100) according to one of claims 1 to 5, wherein the apparatus (100) is configured to

decompose the current diaphragm deflection signal block ($130_2$, $X_i$) into at least one frequency band signal time block; and
determine, for each of the at least one frequency band signal time block, at least one further temporal position ($k_{c,l}$) where a predetermined signal combination exceeds a maximum deflection limiting value ($X_{max}$) in the first overlap area (122) of the current time block ($120_2$, i) with the preceding time block (i-1, $120_1$) as well as in the residual current time block (124).

7. Apparatus (100) according to claim 6, wherein the signal combination comprises at least one of the following additive combinations:

an additive combination of the current diaphragm deflection signal block ($X_i$) with a modified preceding diaphragm deflection signal block ($\tilde{X}_{i-1}$, $X_{alt}$, $160_1$); and
an additive combination of the respective frequency band signal time block with the modified preceding diaphragm deflection signal block ($\tilde{X}_{i-1}$, $X_{alt}$, $160_1$); and
an additive combination of an amount of the current diaphragm deflection signal block ($X_i$) with an amount of the modified preceding diaphragm deflection signal block ($\tilde{X}_{i-1}$, $X_{alt}$).

8. Apparatus (100) according to one of claims 6 and 7, wherein the apparatus (100) is configured to determine an attenuation factor for each of the at least one frequency band signal time block based on the level (150a) and the further temporal position (142, $k_{c,l}$) to attenuate the current diaphragm deflection signal block ($130_2$, $X_i$).

9. Apparatus (100) according to claim 8, wherein the apparatus (100) is configured to compare the attenuation factor per frequency band signal time block for the current time block with a version of the attenuation factor per frequency band signal time block for the preceding time block, reduced in attenuation strength by a predetermined fading-away function and to use a selected attenuation factor that is associated with a higher attenuation for the current time block of the same; and
wherein the apparatus (100) is configured to split the current diaphragm deflection signal block ($130_2$, $X_i$) into a percussive signal portion and a harmonic signal portion and to determine the predetermined fading-away function in dependence on the percussive signal portion and/or the harmonic signal portion.

10. Apparatus (100) according to one of claims 6 to 9, wherein the apparatus (100) is configured to calculate, for each of the at least one further temporal position (142, $k_{c,l}$), a first maximum deflection portion ($h_{b,l}$, 180a) for the current

time block ($120_2$, i) by considering the maximum deflection limiting value ($X_{max}$) and the modified preceding diaphragm deflection signal block ($\tilde{X}_{i-1}$, $X_{alt}$, $160_1$).

11. Apparatus (100) according to one of claims 1 to 10, wherein the apparatus (100) is configured to calculate a modified current loudspeaker signal block ($170_2$, $\tilde{U}_i$) from the modified current diaphragm deflection signal block ($\tilde{X}_i$, $160_2$) and to subject a first part of the modified current loudspeaker signal block ($170_2$, $\tilde{U}_i$) to an overlap-add with a modified preceding loudspeaker signal block ($170_1$, $\tilde{U}_{i-1}$) to synthesize a modified loudspeaker signal ($\tilde{U}$, 170); and wherein the apparatus (100) is configured to provide a current loudspeaker signal (110, $U_i$) instead of the modified current loudspeaker signal block ($170_2$, $\tilde{U}_i$) when a maximum deflection of the current diaphragm deflection signal block ($130_2$, $X_i$) of the current time block ($120_2$, i) does not exceed a maximum deflection limiting value ($X_{max}$).

12. Apparatus (100) according to one of claims 1 to 11, wherein the apparatus (100) is configured to attenuate the current diaphragm deflection signal block ($130_2$, $X_i$) to calculate one or several attenuation factors based on the level and to compute the one or several attenuation factors with the current diaphragm deflection signal block ($130_2$, $X_i$); and wherein the apparatus (100) is configured to compare the one or several attenuation factors for the current time block (i, $120_2$) with a version of the one or several attenuation factors for the preceding time block (i-1, $120_1$), reduced in attenuation strength by a predetermined fading-away function and to use a selected attenuation that is associated with a higher attenuation for the current time block (i, $120_2$) of the same.

13. Apparatus (100) according to claim 12, wherein the apparatus (100) is configured to split the current diaphragm deflection signal block ($130_2$, $X_i$) into a percussive signal portion and a harmonic signal portion and to determine the predetermined fading-away function in dependence on the percussive signal portion and/or the harmonic signal portion; and wherein the predetermined fading-away function has shorter time constants for the percussive signal portion than for the harmonic signal portion.

14. Method for modifying a loudspeaker signal (U, $U_i$, $U_{i+1}$, 110) for preventing diaphragm over-deflection, comprising:

    block-by-block prediction of a diaphragm deflection signal (X, 130) in overlapping time blocks ($120_1$, $120_2$, $120_3$, i-1, i, i+1) based on the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);
    determination of a temporal position (140, $k_0$) of a maximum deflection ($X_i[k_0]$) of a current diaphragm deflection signal block ($130_2$, $X_i$) of a current time block ($120_2$, i) within an overlap area (124) with a subsequent time block ($120_3$, i+1);
    calculation of a level (150a) up to which the current diaphragm deflection signal block ($130_2$, $X_i$) can be controlled without diaphragm over-deflection for the current time block ($120_2$, i) by considering a comparison of the current diaphragm deflection signal block ($X_i[k_0]$, $130_2$) with a subsequent diaphragm deflection signal block ($130_3$) or an estimation of the subsequent diaphragm deflection signal block ($130_3$) from the current diaphragm deflection signal block ($130_2$, $X_i$) at the temporal position (140);
    attenuation of the current diaphragm deflection signal block ($130_2$, $X_i$) based on the level (150a) to obtain a modified current diaphragm deflection signal block ($\tilde{X}_i$, $160_2$); and
    synthesization of a modified loudspeaker signal (170, $\tilde{U}$) based on the modified current diaphragm deflection signal block ($\tilde{X}_i$, $160_2$).

15. Method for modifying a loudspeaker signal (U, $U_i$, $U_{i+1}$, 110) for preventing diaphragm over-deflection, comprising:

    block-by-block prediction of a diaphragm deflection signal (X, 130) in overlapping time blocks ($120_1$, $120_2$, $120_3$, i-1, i, i+1) based on the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);
    determination of a first maximum deflection portion ($h_{b,l}$, 180a) for a current diaphragm deflection signal block ($130_2$, $X_i$) of a current time block ($120_2$, i) in a first overlap area (122) of the current time block ($120_2$, i) with a preceding time block (i-1, $120_1$) as well as in the residual area of the current diaphragm deflection signal block ($130_2$, $X_i$);
    determination of a second maximum deflection portion (180b, $h_a$) for the current diaphragm deflection signal block ($130_2$, $X_i$) of the current time block ($120_2$, i) in a second overlap area (124) of the current time block ($120_2$, i) with a subsequent time block ($120_3$, i+1);
    calculation of a level (150a) based on the first maximum deflection portion ($h_{b,l}$, 180a) when the first maximum deflection portion ($h_{b,I}$, 180a) is smaller than the second maximum deflection portion (180b, $h_a$) or calculation of the level (150a) based on the second maximum deflection portion (180b, $h_a$) when the second maximum deflection portion (180b, $h_a$) is smaller than the first maximum deflection portion ($h_{b,I}$, 180a);

attenuation of the current diaphragm deflection signal block ($130_2$, $X_i$) based on the level (150a) to obtain a modified current diaphragm deflection signal block ($\tilde{X}_i$, $160_2$); and

synthesization of a modified loudspeaker signal ($\tilde{U}$, 170) based on the modified current diaphragm deflection signal block ($\tilde{X}_i$, $160_2$).

## Revendications

1. Dispositif (100) de modification d'un signal de haut-parleur (U, $U_1$, $U_{i+1}$, 110) pour éviter une déviation excessive de la membrane, qui est configuré pour

   prédire bloc par bloc, dans les blocs dans le temps qui se chevauchent (120i, $120_2$, $120_3$, i-1, i, i+1), sur base du signal de haut-parleur (U, $U_1$, $U_{1+1}$, 110), un signal de déviation de membrane (X, 130) pour obtenir, par bloc dans le temps ($120_1$, $120_2$, $120_3$, i-1, i, i+1), un bloc de signaux de déviation de membrane ($130_1$, $130_2$, $130_3$, $X_{1-1}$, $X_i$, $X_{i+1}$);

   déterminer une position dans le temps (140, ko) d'une déviation maximale ($X_i[k_0]$) d'un bloc de signaux de déviation de membrane actuel ($130_2$, $X_1$) d'un bloc dans le temps actuel ($120_2$, i) dans une zone de chevauchement (124) avec un bloc dans le temps suivant ($120_3$, i+1);

   calculer, pour le bloc dans le temps actuel ($120_2$, i), en tenant compte d'une comparaison du bloc de signaux de déviation de membrane actuel ($X_i[k_0]$, $130_2$) avec un bloc de signaux de déviation de membrane suivant ($130_3$) ou d'une estimation du bloc de signaux de déviation de membrane suivant ($130_3$) à partir du bloc de signaux de déviation de membrane actuel ($130_2$, $X_1$) à la position dans le temps (140), un niveau (150a) jusqu'auquel le bloc de signaux de déviation de membrane actuel ($130_2$, $X_1$) peut être commandé sans déviation excessive de la membrane;

   atténuer le bloc de signaux de déviation de membrane actuel ($130_2$, $X_i$) sur base du niveau (150a) pour obtenir un bloc de signaux de déviation de membrane actuel modifié ($\tilde{X}_i$, $160_2$); et

   synthétiser un signal de haut-parleur modifié ($\tilde{U}$, 170) sur base du bloc de signaux de déplacement de membrane actuel modifié ($\tilde{X}_i$, $160_2$).

2. Dispositif (100) selon la revendication 1, dans lequel le dispositif (100) est configuré pour déterminer, pour calculer le niveau (150a) d'un quotient entre le bloc de signaux de déviation de membrane actuel ($X_1[k_0]$, $130_2$) à la position dans le temps ($k_0$, 140), d'une part, et une somme du bloc de signaux de déviation de membrane suivant ($130_3$) ou de l'estimation du bloc de signaux de déviation de membrane suivant ($130_3$) à la position dans le temps (140) et le bloc de signaux de déviation de membrane actuel ($X_i[k_0]$, $130_2$) à la position dans le temps (140, $k_0$), d'autre part.

3. Dispositif (100) de modification d'un signal de haut-parleur (U, $U_i$, $U_{i+1}$, 110) pour éviter une déviation excessive de la membrane, qui est configuré pour

   prédire bloc par bloc, dans les blocs dans le temps qui se chevauchent (120i, $120_2$, $120_3$, i-1, i, i+1), sur base du signal de haut-parleur (U, $U_i$, $U_{i+1}$, 110), un signal de déviation de membrane (X, 130) pour obtenir, par bloc dans le temps (120i, $120_2$, $120_3$, i-1, i, i+1), un bloc de signaux de déviation de membrane ($130_1$, $130_2$, $130_3$, $X_{I-1}$, $X_i$, $X_{I+1}$);

   déterminer une première part de déviation maximale ($h_{b,I}$, 180a) pour un bloc de signaux de déviation de membrane actuel ($130_2$, $X_i$) d'un bloc dans le temps actuel ($120_2$, i) dans une première zone de chevauchement (122) du bloc dans le temps actuel ($120_2$, i) avec un bloc dans le temps précédent (i-1, $120_1$) ainsi que dans la zone restante (124) à partir du bloc de signaux de déviation de membrane actuel ($130_2$, $X_i$);

   déterminer une deuxième part de déviation maximale (180b, $h_a$) pour le bloc de signaux de déviation de membrane actuel ($130_2$, $X_i$) du bloc dans le temps actuel ($120_2$, i) dans une deuxième zone de chevauchement (124) du bloc dans le temps actuel ($120_2$, i) avec un bloc dans le temps suivant ($120_3$, i+1);

   calculer un niveau (150a) sur base de la première part de déviation maximale ($h_{b,1}$, 180a) lorsque la première part de déviation maximale ($h_{b,1}$, 180a) est inférieure à la deuxième part de déviation maximale (180b, $h_a$) ou calculer le niveau (150a) sur base de la deuxième part de déviation maximale (180b, $h_a$) lorsque la deuxième part de déviation maximale (180b, $h_a$) est inférieure à la première part de déviation maximale ($h_{b,1}$, 180a);

   atténuer le bloc de signaux de déviation de membrane actuel ($130_2$, $X_1$) sur base du niveau (150a) pour obtenir un bloc de signaux de déviation de membrane actuel modifié ($\tilde{X}_i$, $160_2$); et

synthétiser un signal de haut-parleur modifié ($\tilde{U}$, 170) sur base du bloc de signaux de déviation de membrane actuel modifié ($\tilde{X}_i$, $160_2$).

4. Dispositif (100) selon la revendication 3, dans lequel le dispositif (100) est configuré pour calculer le niveau (150a) sur base de la première part de déviation maximale ($h_{b,1}$, 180a) au moyen d'un produit constitué d'une valeur limite de déviation maximale ($X_{max}$) et de la première part de déviation maximale ($h_{b,1}$, 180a) ou pour calculer le niveau (150a) sur base de la deuxième part de déviation maximale (180b, $h_a$) au moyen d'un produit constitué de la valeur limite de déviation maximale ($X_{max}$) et de la deuxième part de déviation maximale (180b, $h_a$).

5. Dispositif (100) selon la revendication 3 ou la revendication 4, dans lequel le dispositif (100) est configuré

pour estimer la deuxième part de déviation maximale (180b, $h_a$) sur base du bloc de signaux de déviation de membrane actuel ($130_2$, $X_1$); ou
pour estimer la deuxième part de déviation maximale (180b, $h_a$) sur base du bloc de signaux de déviation de membrane actuel ($130_2$, $X_i$) à l'aide d'un réseau neuronal; ou
pour déterminer une position dans le temps (140, ko) d'une déviation maximale ($X_i[k_0]$) du bloc de signaux de déviation de membrane actuel ($130_2$, $X_i$) du bloc dans le temps actuel ($120_2$, i) dans la deuxième zone de chevauchement (124) avec le bloc dans le temps suivant ($120_3$, i+1); et
pour déterminer, pour la deuxième part de déviation maximale (180b, $h_a$), un quotient entre le bloc de signaux de déviation de membrane actuel ($X_i[ko]$, $130_2$) à la position dans le temps (ko, 140), d'une part, et une somme d'un bloc de signaux de déviation de membrane suivant ($130_3$) ou une estimation du bloc de signaux de déviation de membrane suivant ($130_3$) à la position dans le temps (140), sur base du bloc de signaux de déviation de membrane actuel ($130_2$, $X_1$) du bloc dans le temps actuel ($120_2$, i), et le bloc de signaux de déviation de membrane actuel ($X_i[ko]$, $130_2$) à la position dans le temps (140, ko), d'autre part.

6. Dispositif (100) selon l'une des revendications 1 à 5, dans lequel le dispositif (100) est configuré pour décomposer le bloc de signaux de déviation de membrane actuel ($130_2$, $X_1$) en au moins un bloc dans le temps de signaux de bande de fréquences; et
pour déterminer, pour chacun des au moins un bloc dans le temps de signaux de bande de fréquences, au moins une autre position dans le temps ($k_{c,1}$) à laquelle une combinaison de signaux prédéterminée excède une valeur limite de déviation maximale ($X_{max}$), et ce dans la première zone de chevauchement (122) du bloc dans le temps actuel ($120_2$, i) avec le bloc dans le temps précédent (i-1, $120_1$) ainsi que dans le bloc dans le temps actuel restant (124).

7. Dispositif (100) selon la revendication 6, dans lequel la combinaison de signaux présente au moins l'une des combinaisons additives suivantes:

une combinaison additive du bloc de signaux de déviation de membrane actuel ($X_i$) avec un bloc de signaux de déviation de membrane précédent modifié ($\tilde{X}_{i-1}$, $X_{alt}$, $160_1$); et
une combinaison additive du bloc dans le temps de signaux de bande de fréquences respectif avec le bloc de signaux de déviation de membrane précédent modifié ($\tilde{X}_{i-1}$, $X_{alt}$, $160_1$); et
une combinaison additive d'une quantité du bloc de signaux de déviation de membrane actuel ($X_1$) avec une quantité du bloc de signaux de déviation de membrane précédent modifié ($\tilde{X}_{i-1}$, $X_{alt}$).

8. Dispositif (100) selon l'une des revendications 6 et 7, dans lequel le dispositif (100) est configuré pour déterminer un facteur d'atténuation pour chacun desdits au moins un bloc dans le temps de signaux de bande de fréquences sur base du niveau (150a) et de l'autre position dans le temps (142, $k_{c,1}$) pour atténuer le bloc de signaux de déviation de membrane actuel ($130_2$, $X_i$).

9. Dispositif (100) selon la revendication 8, dans lequel le dispositif (100) est configuré pour comparer le facteur d'atténuation par bloc dans le temps de signaux de bande de fréquences pour le bloc dans le temps actuel avec une version du facteur d'atténuation par bloc dans le temps de signaux de bande de fréquences pour le bloc dans le temps précédent réduit en intensité d'atténuation par une fonction d'atténuation prédéterminée, et pour utiliser, pour le bloc dans le temps actuel parmi ces derniers, un facteur d'atténuation sélectionné qui est lié à une atténuation supérieure; et
dans lequel le dispositif (100) est configuré pour diviser le bloc de signaux de déviation de membrane actuel ($130_2$, $X_1$) en une part de signal de percussion et une part de signal harmonique et pour déterminer la fonction d'atténuation prédéterminée en fonction de la part de signal de percussion et/ou de la part de signal harmonique.

**10.** Dispositif (100) selon l'une des revendications 6 à 9, dans lequel le dispositif (100) est configuré pour calculer, pour chacune des au moins une autre position dans le temps (142, $k_{c,1}$), une première part de déviation maximale ($h_{b,1}$, 180a) pour le bloc dans le temps actuel ($120_2$, i) en tenant compte de la valeur limite de déviation maximale ($X_{max}$) et du bloc de signaux de déviation de membrane précédent modifié ($\tilde{X}_{i-1}$, $X_{alt}$, $160_1$).

**11.** Dispositif (100) selon l'une des revendications 1 à 10, dans lequel le dispositif (100) est configuré pour calculer, à partir du bloc de signaux de déviation de membrane de actuel modifié ($\tilde{X}_i$, $160_2$), un bloc de signaux de haut-parleur actuel modifié ($170_2$, $\tilde{U}_i$) et pour soumettre une première partie du bloc de signaux de haut-parleur actuel modifié ($170_2$, $\tilde{U}_i$) à une addition en chevauchement avec un bloc de signaux de haut-parleur précédent modifié ($170_2$, $\tilde{U}_{i-1}$) pour synthétiser un signal de haut-parleur modifié ($\tilde{U}$, 170); et
dans lequel le dispositif (100) est conçu pour mettre à disposition, au lieu du bloc de signaux de haut-parleur actuel modifié ($170_2$, $\tilde{U}_i$), un signal de haut-parleur actuel (110, $U_i$) lorsqu'une déviation maximale du bloc de signaux de déviation de membrane actuel ($130_2$, $X_i$) du bloc dans le temps actuel ($120_2$, i) n'excède pas une limite de déviation maximale ($X_{max}$).

**12.** Dispositif (100) selon l'une des revendications 1 à 11, dans lequel le dispositif (100) est conçu pour calculer, pour atténuer le bloc de signaux de déviation de membrane actuel ($130_2$, $X_i$), un ou plusieurs facteurs d'atténuation sur base du niveau et pour compenser les un ou plusieurs facteurs d'atténuation par le bloc de signaux de déviation de membrane actuel ($130_2$, $X_1$); et
dans lequel le dispositif (100) est configuré pour comparer les un ou plusieurs facteurs d'atténuation pour le bloc dans le temps actuel (i, $120_2$) avec une version des un ou plusieurs facteurs d'atténuation pour le bloc dans le temps précédent (i-1, $120_1$) réduite en intensité d'atténuation par une fonction d'atténuation prédéterminée, et pour utiliser pour le bloc dans le temps actuel (i, $120_2$), parmi ces derniers, un facteur d'atténuation choisi qui est lié à une atténuation supérieure.

**13.** Dispositif (100) selon la revendication 12, dans lequel le dispositif (100) est configuré pour décomposer le bloc de signaux de déviation de membrane actuel ($130_2$, $X_1$) en une part de signal de percussion et une part de signal harmonique et pour déterminer la fonction d'atténuation prédéterminée en fonction de la part de signal de percussion et/ou de la part de signal harmonique; et
dans lequel la fonction d'atténuation prédéterminée présente, pour la part de signal de percussion, des constantes de temps plus courtes que pour la part de signal harmonique.

**14.** Procédé de modification d'un signal de haut-parleur (U, $U_l$, $U_{l+1}$, 110) pour éviter une déviation excessive de la membrane, aux étapes suivantes consistant à:

prédire bloc par bloc, dans les blocs de temps qui se chevauchent ($120_1$, $120_2$, $120_3$, i-1, i, i+1), sur base du signal de haut-parleur (U, $U_l$, $U_{1+1}$, 110) d'un signal de déviation de membrane (X, 130), pour obtenir, par bloc dans le temps ($120_1$, $120_2$, $120_3$, i-1, i, i+1), un bloc de signaux de déviation de membrane ($130_1$, $130_2$, $130_3$, $X_{l-1}$, $X_l$, $X_{i+1}$);
déterminer une position dans le temps (140, ko) d'une déviation maximale ($X_i[k_0]$) d'un bloc de signaux de déviation de membrane actuel ($130_2$, $X_1$) d'un bloc dans le temps actuel ($120_2$, i) dans une zone de chevauchement (124) avec un bloc dans le temps suivant ($120_3$, i+1);
calculer un niveau (150a) jusqu'auquel le bloc de signaux de déviation de membrane actuel ($130_2$, $X_1$) peut être commandé sans déviation excessive de la membrane pour le bloc dans le temps actuel ($120_2$, i) en tenant compte d'une comparaison du bloc de signaux de déviation de membrane actuel ($X_i[ko]$, $130_2$) avec un bloc de signaux de déviation de membrane suivant ($130_3$) ou une estimation du bloc de signaux de déviation de membrane suivant (130s) à partir du bloc de signaux de déviation de membrane actuel ($130_2$, $X_1$) à la position dans le temps (140),
atténuer le bloc de signaux de déviation de membrane actuel ($130_2$, $X_1$) sur base du niveau (150a) pour obtenir un bloc de signaux de déviation de membrane actuel modifié ($\tilde{X}_i$, $160_2$); et
synthétiser un signal de haut-parleur modifié (170, $\tilde{U}$) sur base du bloc de signaux de déviation de membrane actuel modifié ($\tilde{X}_i$, $160_2$).

**15.** Procédé de modification d'un signal de haut-parleur (U, $U_1$, $U_{i+1}$, 110) pour éviter une déviation excessive de la membrane, aux étapes suivantes consistant à:

prédire bloc par bloc, dans les blocs de temps qui se chevauchent ($120_1$, $120_2$, $120_3$, i-1, i, i+1), sur base du signal de haut-parleur (U, $U_1$, $U_{1+1}$, 110), un signal de déviation de membrane (X, 130), pour obtenir, par bloc

dans le temps ($120_1$, $120_2$, $120_3$, i-1, i, i+1), un bloc de signaux de déviation de membrane ($130_1$, $130_2$, $130_3$, $X_{i-1}$, $X_1$, $X_{i+1}$);

déterminer une première part de déviation maximale ($h_{b,1}$, 180a) pour un bloc de signaux de déviation de membrane actuel ($130_2$, $X_1$) d'un bloc dans le temps actuel ($120_2$,i) dans une première zone de chevauchement (122) du bloc dans le temps actuel ($120_2$,i) avec un bloc dans le temps précédent (i -1, $120_1$) ainsi que dans la zone restante du bloc de signaux de déviation de membrane actuel ($130_2$, $X_i$);

déterminer une deuxième part de déviation maximale (180b, $h_a$) pour le bloc de signaux de déviation de membrane actuel ($130_2$, $X_1$) du bloc dans le temps actuel ($120_2$, i) dans une deuxième zone de chevauchement (124) du bloc dans le temps actuel ($120_2$, i) avec un bloc dans le temps suivant ($120_3$, i+1);

calculer un niveau (150a) sur base de la première part de déviation maximale ($h_{b,1}$, 180a) lorsque la première part de déviation maximale ($h_{b,1}$, 180a) est inférieure à la deuxième part de déviation maximale (180b, $h_a$) ou calculer le niveau (150a) sur base de la deuxième part de déviation maximale (180b, $h_a$) lorsque la deuxième part de déviation maximale (180b, $h_a$) est inférieure à la première part de déviation maximale ($h_{b,1}$, 180a);

atténuer le bloc de signaux de déviation de membrane actuel ($130_2$, $X_1$) sur base du niveau (150a) pour obtenir un bloc de signaux de déviation de membrane actuel modifié ($\tilde{X}_i$, $160_2$); et

synthétiser un signal de haut-parleur modifié ($\tilde{U}$, 170) sur base du bloc de signaux de déviation de membrane actuel modifié ($\tilde{X}_i$, $160_2$).

Fig. 1

Fig. 2

Fig. 3

EP 3 818 727 B1

Fig. 4

Fig. 5c

statistisches Modell

$u_i$

$U \rightarrow X$

$X_i$

$h_a$

135

182

180b

Fig. 5b

$u_i$

$U \rightarrow X$

$X_i$

Prädiktion $X_{i+1}$

$X_{i+1}$

$X_i$

vorausschauende Austeuerungsreserve-Berechnung

$h_a$

135

136

180b

Fig. 5a

$u_{i+1}$

$u_i$

$U \rightarrow X$

$X_{i+1}$

$X_i$

vorausschauende Austeuerungsreserve-Berechnung

$h_a$

135

180b

34

Fig. 6

<u>300</u>

```
┌─────────────────────────────────────┐
│   Blockweise Prädiktion, in überlappenden │
│   Zeitblöcken, auf Basis des Lautsprechersignals │───310
│   eines Membranauslenkungssignals    │
└─────────────────────────────────────┘
                    │
                    ▼
┌─────────────────────────────────────┐
│   Ermittlung einer zeitlichen Position einer │
│   maximalen Auslenkung eines aktuellen │───320
│   Membranauslenkungssignalblocks     │
└─────────────────────────────────────┘
                    │
                    ▼
┌─────────────────────────────────────┐
│   Berechnung eines Pegels, bis zu welchem │
│   der aktuelle Membranauslenkungssignalblock │───330
│   ohne Membranüberauslenkung aussteuerbar ist │
└─────────────────────────────────────┘
                    │
                    ▼
┌─────────────────────────────────────┐
│   Dämpfung des aktuellen             │
│   Membranauslenkungssignalblocks     │───340
│   auf Basis des Pegels               │
└─────────────────────────────────────┘
                    │
                    ▼
┌─────────────────────────────────────┐
│   Synthetisierung eines modifizierten │───350
│   Lautsprechersignals                │
└─────────────────────────────────────┘
```

## Fig. 7

400

Blockweise Prädiktion, in überlappenden
Zeitblöcken, auf Basis des Lautsprechersignals
eines Membranauslenkungssignals — 310

Bestimmung eines ersten maximalen
Auslenkungsanteils für einen aktuellen
Membranauslenkungssignalblock — 410

Bestimmung eines zweiten maximalen
Auslenkungsanteils für den aktuellen
Membranauslenkungssignalblock — 420

Berechnung eines Pegels basierend auf dem
ersten maximalen Auslenkungsanteil oder basierend
auf dem zweiten maximalen Auslenkungsanteil — 330

Dämpfung des aktuellen
Membranauslenkungssignalblocks
auf Basis des Pegels — 340

Synthetisierung eines modifizierten
Lautsprechersignals — 350

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4113983 A
- US 4327250 A
- US 5481617 A
- US 20180014121 A1
- US 8855322 B2
- US 9807502 B
- US 2018184201 A1